# EUROPÄISCHE PATENTSCHRIFT

(11) **EP 4 185 531 B1**
(45) Veröffentlichungstag und Bekanntmachung des Hinweises auf die Patenterteilung: **18.03.2026**
(21) Anmeldenummer: 21748638.0
(22) Anmeldetag: 23.07.2021
(51) Int. Cl.: B64D 11/06

(54) **FLUGZEUGSITZVORRICHTUNG**
AIRCRAFT SEAT DEVICE
DISPOSITIF DE SIÈGE D'AVION

(30) Priorität: 24.07.2020 DE 102020119647
(43) Veröffentlichungstag der Anmeldung: 31.05.2023
(73) Patentinhaber: Recaro Aircraft Seating GmbH & Co. KG, 74523 Schwäbisch Hall (DE)
(72) Erfinder: ITZINGER, Andreas, 74545 Michelfeld (DE); ROGGE, Tobias, 70180 Stuttgart (DE); CEDER, Sven, 74523 Schwäbisch Hall (DE); SCHWARZ, Tanja, 71723 Großbottwar (DE); JAKUBOWSKI, Jens, 73527 Schwäbisch Gmünd (DE); ECKERT, Stefanie, 74523 Schwäbisch Hall (DE); GÄRTNER, André, 74523 Schwäbisch Hall (DE); GLADYSZ, Bartosz, 71332 Waiblingen (DE); FORGATSCH, Oliver, 74523 Schwäbisch Hall (DE); MINZER, Heiko, 74523 Schwäbisch Hall (DE); FRANK, Uwe, 74547 Untermünkheim (DE)
(74) Vertreter: Daub, Thomas
(86) Internationale Anmeldenummer: PCT/EP2021/070731
(87) Internationale Veröffentlichungsnummer: WO 2022/018280

(56) Entgegenhaltungen:
- EP-A1- 3 572 325
- EP-A1- 3 816 049
- WO-A1-2013/030797
- DE-C1- 19 541 567
- US-A1- 2007 085 389
- US-A1- 2019 061 955

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit zumindest einem Flugzeugsitz, welcher eine Rückenlehne aufweist und einen Flugzeugsitzbereich ausbildet, der von der Rückenlehne in zumindest einer Richtung begrenzt ist, vorgeschlagen worden.

Die Druckschrift US 2019/061955 A1 offenbart eine Flugzeugsitzvorrichtung mit zwei nebeneinander angeordneten Flugzeugsitzen, mit einer Trenneinheit, die an der Rückenlehne des zumindest einen Flugzeugsitzes und/oder an einer Kopfstütze des zumindest einen Flugzeugsitzes angeordnet ist, mit einer Konsole, die zwischen den beiden Flugzeugsitzen angeordnet ist, wobei sich diese auch zwischen den Rückenlehnen der Flugzeugsitze erstreckt.

Die Druckschrift US 2007/085398 A1 offenbart eine Flugzeugsitzvorrichtung mit zwei nebeneinander angeordneten Flugzeugsitzen, mit einer Konsole, die zwischen den beiden Flugzeugsitzen angeordnet ist, wobei sich diese auch zwischen den Rückenlehnen der Flugzeugsitze erstreckt, wobei an der Konsole ein schwenkbar angeordnetes Trennelement angeordnet ist, durch das Sitzbereiche der beiden Flugzeugsitze zumindest teilweise voneinander abgetrennt werden können.

Die Druckschrift EP 3 572 325 A1 offenbart eine Abtrennvorrichtung, die dazu vorgesehen ist, Sitzbereiche von zwei nebeneinander angeordneten Flugzeugsitzen zumindest teilweise voneinander abzutrennen, wobei die Abtrennvorrichtung ein Gehäuse, das zwischen den Rückenlehnen der benachbarten Flugzeugsitze montierbar ist, und ein in dem Gehäuse angeordnetes Trennelement aufweist, das zur Abtrennung der Sitzbereiche aus dem Gehäuse ausgefahren werden kann, um sich in einen Berch zwischen den Sitzbereichen zu erstrecken.

Die Druckschrift DE 195 41 567 C1 offenbart eine Flugzeugsitzvorrichtung mit zwei nebeneinander angeordneten Flugzeugsitzen, mit einer Konsole, die zwischen den beiden Flugzeugsitzen angeordnet ist, wobei sich diese auch zwischen den Rückenlehnen der Flugzeugsitze erstreckt, wobei an der Konsole ein schwenkbar angeordnetes Trennelement angeordnet ist, durch das Sitzbereiche der beiden Flugzeugsitze zumindest teilweise voneinander abgetrennt werden können.

Die Druckschrift WO 2013/030797 A1 offenbart eine Konsole, die in einem Bereich zwischen den Rückenlehnen angeordnet ist, die ein Staufach für ein ausfahrbares Trennelement aufweist.

Die Aufgabe der Erfindung besteht insbesondere darin, eine gattungsgemäße Vorrichtung mit verbesserten Eigenschaften hinsichtlich eines Gesundheitsschutzes für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einem Flugzeugsitz, welcher eine Rückenlehne aufweist und einen Flugzeugsitzbereich ausbildet, der von der Rückenlehne in zumindest einer Richtung begrenzt ist, mit einer Infektionsschutztrenneinheit, die an der Rückenlehne des zumindest einen Flugzeugsitzes und/oder an einer Kopfstütze des zumindest einen Flugzeugsitzes angeordnet ist und die dazu vorgesehen ist, den Flugzeugsitzbereich zumindest in einem Kopfbereich von einer Umgebung des Flugzeugsitzbereichs, insbesondere von einem weiteren Flugzeugsitzbereich und/oder einem Flugzeugkabinengangbereich, abzutrennen, mit zumindest einem weiteren Flugzeugsitz, welcher gemeinsam mit dem zumindest einen Flugzeugsitz in einer Sitzreihe angeordnet ist, wobei die zumindest eine Infektionsschutztrenneinheit mit der Rückenlehne des zumindest einen Flugzeugsitzes und mit einer weiteren Rückenlehne des zumindest einen weiteren Flugzeugsitzes gekoppelt ist.

Es wird vorgeschlagen, dass die zumindest eine Infektionsschutztrenneinheit zumindest ein aus einem Textil und/oder aus einer Folie gebildetes Trennelement aufweist, das dazu vorgesehen ist, einen Freiraum zwischen der Rückenlehne des zumindest einen Flugzeugsitzes und der weiteren Rückenlehne des zumindest einen weiteren Flugzeugsitzes zumindest zu einem Großteil auszufüllen. Durch die erfindungsgemäße Ausgestaltung kann eine Flugzeugsitzvorrichtung mit verbesserten Eigenschaften hinsichtlich eines Gesundheitsschutzes für einen Passagier bereitgestellt werden. Durch die erfindungsgemäße Ausgestaltung wird eine vorteilhafte Abtrennung des Flugzeugsitzbereichs zumindest in dem Kopfbereich erreicht. Dadurch kann eine Vermischung der in dem Flugzeugsitzbereich befindlichen Luft mit Luft aus der Umgebung vorteilhaft reduziert werden. Des Weiteren kann dadurch eine ungehinderte Bewegung von Aerosolen, welche Viren, Keime und/oder Bakterien enthalten können, zwischen Flugzeugsitzbereichen verringert und besonders vorteilhaft vermieden werden. Ferner kann dadurch ein Einatmen von potenziell infektiöser Luft aus einem benachbarten Flugzeugsitzbereich verringert und besonders vorteilhaft vermieden werden. Durch die erfindungsgemäße Ausgestaltung wird ein Risiko einer Infektion vorteilhaft verringert und damit ein besonders vorteilhafter Gesundheitsschutz für den Passagier erreicht. Des Weiteren wird durch die erfindungsgemäße Ausgestaltung gleichzeitig eine Privatsphäre für den Passagier vorteilhaft erhöht, indem der Passagier in dem Kopfbereich gegenüber einer Umgebung abgeschirmt wird. Dadurch kann ein vorteilhaft hoher Komfort für den Passagier erreicht werden. Vorzugsweise ist die Flugzeugsitzvorrichtung dazu vorgesehen, in einer Flugzeugkabine eines Flugzeugs angeordnet zu werden. Unter "vorgesehen" soll vorzugsweise speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Bevorzugt weist die Flugzeugkabine ein Belüftungssystem auf, welches dazu vorgesehen ist, dem zumindest einen Flugzeugsitz Frischluft zuzuführen und Brauchluft von dem zumindest einen Flugzeugsitz abzuführen. Besonders bevorzugt wird der Flugzeugsitzbereich durch einen Luftstrom des Belüftungssystems durchdrungen, welcher von einer Flugzeugkabinendecke zu einem Flugzeugkabinenboden gerichtet ist. Vorzugsweise ist der Flugzeugsitz als ein Economy-Class-Flugzeugsitz ausgebildet. Besonders bevorzugt ist der Flugzeugsitz Teil einer Sitzreihe. Bevorzugt weist die Flugzeugsitzvorrichtung eine Aufständereinheit auf, die dazu vorgesehen ist, den Flugzeugsitz auf einer Aufständerebene aufzuständern. Bevorzugt bildet ein Flugzeugkabinenboden die Aufständerebene aus. Vorzugsweise weist der Flugzeugsitz eine Sitzbodeneinheit auf. Bevorzugt ist die Sitzbodeneinheit mit der Aufständereinheit gekoppelt. Bevorzugt ist die Rückenlehne mit der Aufständereinheit gekoppelt. Bevorzugt weist die Flugzeugsitzvorrichtung zumindest einen Sitzteiler auf. Bevorzugt ist der zumindest eine Sitzteiler mit der Aufständereinheit gekoppelt und unmittelbar neben dem Flugzeugsitz angeordnet. Vorzugsweise weist die Flugzeugsitzvorrichtung zumindest eine Armlehne auf, die an dem zumindest einen Sitzteiler angeordnet ist. Unter einem "Flugzeugsitzbereich" soll vorzugsweise ein Bereich verstanden werden, der einem auf dem Flugzeugsitz sitzenden Passagier, insbesondere einem Oberkörper des Passagiers, bei einer gewöhnlichen Sitzhaltung zur Verfügung steht. Bevorzugt ist der Flugzeugsitzbereich idealisiert quaderförmig ausgebildet. Vorzugsweise erstreckt sich der Flugzeugsitzbereich in einer Ebene parallel zu der Aufständerebene betrachtet über eine gesamte Fläche des Flugzeugsitzes, insbesondere über eine gesamte Fläche der Sitzbodeneinheit und über eine gesamte Fläche einer auf der Vorderseite der Rückenlehne angeordneten Rückenabstützfläche der Rückenlehne. Bevorzugt begrenzt die zumindest eine Armlehne den Flugzeugsitzbereich in wenigstens einer Richtung. Vorzugsweise erstreckt sich der Flugzeugsitzbereich in einer Ebene orthogonal zu der Aufständerebene betrachtet zumindest zwischen der Sitzbodeneinheit und einer Oberkante der Rückenlehne. Bevorzugt ist der Flugzeugsitzbereich entgegen einer Sitzrichtung betrachtet durch die Rückenlehne des Flugzeugsitzes, insbesondere durch die Rückenabstützfläche der Rückenlehne, begrenzt. Grundsätzlich wäre es denkbar, dass sich der Flugzeugsitzbereich bis zu einer vor dem Flugzeugsitz angeordneten Flugzeugkabinentrennwand oder bis zu einer vor dem Flugzeugsitz angeordneten weiteren Rückenlehne erstreckt. Die Umgebung des Flugzeugsitzbereichs ist als ein Bereich außerhalb des Flugzeugsitzbereichs ausgebildet. Bevorzugt ist die Umgebung als ein weiterer Flugzeugsitzbereich und/oder ein Flugzeugkabinengangbereich ausgebildet. Unter einem "Flugzeugkabinengangbereich" soll vorzugsweise ein Bereich verstanden werden, der einen Flugzeugkabinengang der Flugzeugkabine überspannt. Unter einem "Kopfbereich" soll vorzugsweise ein Teilbereich des Flugzeugsitzbereichs verstanden werden, in dem ein Kopf des Passagiers in einer gewöhnlichen Sitzhaltung angeordnet ist. Bevorzugt ist eine Anordnung des Kopfbereichs abhängig von einer Körpergröße des Passagiers. Vorzugsweise erstreckt sich der Kopfbereich von einem Hals des Passagiers bis zu einem obersten Punkt des Kopfes des Passagiers. Bevorzugt ist der Kopfbereich in einer Ebene parallel zu der Aufständerebene betrachtet zumindest im Wesentlichen gleich groß wie der Flugzeugsitzbereich. Unter "zumindest im Wesentlichen" soll vorzugsweise verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Besonders bevorzugt ist der Kopfbereich als ein Ausschnitt des Flugzeugsitzbereichs ausgebildet. Bevorzugt ist der Ausschnitt quaderförmig ausgebildet. Vorzugsweise ist der Kopfbereich von einer unteren Ebene und von einer oberen Ebene begrenzt. Besonders bevorzugt ist der Kopf des Passagiers in einer normalen Sitzposition zwischen der unteren Ebene und der oberen Ebene angeordnet. Vorzugsweise schneidet die untere Ebene den Hals des Passagiers. Vorzugsweise schneidet die obere Ebene den obersten Punkt des Kopfes des Passagiers. Bevorzugt sind die untere Ebene und die obere Ebene parallel zu der Aufständerebene ausgerichtet. Die Begriffe "oben" und "unten" beziehen sich vorzugsweise auf eine relative Anordnung von Ebenen oder Elementen zueinander in einem Betriebszustand, in dem die Aufständerebene horizontal ausgerichtet ist, wobei eine Ebene oder ein Element, welches "oben" angeordnet ist, weiter entfernt von der Aufständerebene ist als eine Ebene oder ein Element, welches "unten" angeordnet ist. Bevorzugt ist die untere Ebene näher an der Aufständerebene angeordnet als die obere Ebene. Unter einer "Infektionsschutztrenneinheit" soll vorzugsweise eine Einheit verstanden werden, die zu einer physischen Abtrennung des Flugzeugsitzbereichs gegenüber der Umgebung des Flugzeugsitzbereichs vorgesehen ist, wobei die physische Abtrennung vorzugsweise dazu vorgesehen ist, eine Infektion eines Passagiers mit einem Krankheitserreger zu vermeiden. Unter "abtrennen" soll insbesondere eine Bereitstellung einer physischen Barriere verstanden werden. Vorzugsweise ist die zumindest eine Infektionsschutztrenneinheit dazu vorgesehen, in der Luft der Umgebung befindliche Krankheitserreger von einem Eindringen in den Kopfbereich abzuhalten. Besonders bevorzugt ist die zumindest eine Infektionsschutztrenneinheit dazu vorgesehen, ein Verlassen von in der Luft des Flugzeugsitzbereichs, insbesondere des Kopfbereichs, befindlichen Krankheitserregern zu vermeiden und/oder zu verhindern. Bevorzugt werden Krankheitserreger durch Ausatmen und/oder Aushusten des Passagiers in die Luft des Flugzeugsitzbereichs, insbesondere des Kopfbereichs, befördert. Bevorzugt werden Krankheitserreger durch Ausatmen und/oder Aushusten eines weiteren Passagiers oder eines Crewmitglieds in die Luft der Umgebung befördert. Vorzugsweise ist die zumindest eine Infektionsschutztrenneinheit fest mit der Rückenlehne des zumindest einen Flugzeugsitzes und/oder fest mit der Kopfstütze des zumindest einen Flugzeugsitzes verbunden.

Des Weiteren wird vorgeschlagen, dass die zumindest eine Infektionsschutztrenneinheit zumindest ein Trennelement aufweist, welches plattenförmig ausgebildet ist und sich zumindest im Wesentlichen in einer Sitzrichtung des zumindest einen Flugzeugsitzes erstreckt. Durch diese Ausgestaltung kann eine vorteilhafte seitliche Abtrennung des Kopfbereichs gegenüber der Umgebung geschaffen werden. Dadurch kann eine Durchmischung von Luft in einer Richtung quer zur Sitzrichtung vorteilhaft vermieden werden. Des Weiteren kann dadurch erreicht werden, dass kontaminierte Luft nicht aus einem benachbarten Flugzeugsitzbereich in den Kopfbereich eintritt und/oder ausgeatmete, kontaminierte Luft nicht in einen benachbarten Flugzeugsitzbereich eindringt. Ferner kann durch diese Ausgestaltung vorteilhaft erreicht werden, dass der Luftstrom des Belüftungssystems den Flugzeugsitzbereich, insbesondere den Kopfbereich, definiert in einer vertikalen Richtung durchdringt. Dabei kann kontaminierte Luft vorteilhaft sicher aus dem Flugzeugsitzbereich abgeführt werden, ohne dass diese in einen benachbarten Kopfbereich geführt wird. Unter einer "Sitzrichtung" soll vorzugsweise eine Richtung verstanden werden, welche zumindest im Wesentlichen parallel zu der Aufständerebene und zumindest im Wesentlichen senkrecht zu der theoretischen, ebenen, senkrecht zu der Aufständerebene ausgerichteten Rückenlehne ausgerichtet ist, wobei die Richtung einer Normalen auf einer Vorderseite der Rückenlehne entspricht, wobei die Vorderseite der Rückenlehne eine Abstützfläche für einen Rücken des Passagiers in einer gewöhnlichen Sitzposition ausbildet. Vorzugsweise ist das zumindest eine Trennelement starr ausgebildet. Vorzugsweise weist das zumindest eine Trennelement ein festes Ende auf, welches mit der Rückenlehne und/oder der Kopfstütze, insbesondere starr, verbunden ist. Vorzugsweise weist das zumindest eine Trennelement ein freies Ende auf, welches von dem festen Ende in Sitzrichtung beabstandet ist. Bevorzugt weist das zumindest eine Trennelement eine trapezförmige Grundform auf. Vorzugsweise weist da zumindest eine Trennelement an dem freien Ende eine vertikale Erstreckung auf, die größer ist als eine vertikale Erstreckung an dem festen Ende. Bevorzugt erstreckt sich das zumindest eine Trennelement zumindest teilweise über die Oberkante der Rückenlehne hinaus. Vorzugsweise ist das zumindest eine Trennelement auch als ein Privatsphäreelement ausgebildet.

Ferner wird vorgeschlagen, dass die zumindest eine Infektionsschutztrenneinheit zumindest ein weiteres Trennelement aufweist, welches beweglich an dem zumindest einen Trennelement angeordnet ist. Durch diese Ausgestaltung kann die Infektionsschutztrenneinheit vorteilhaft an persönliche Bedürfnisse angepasst werden. Ferner kann durch diese Ausgestaltung ein Eintreten oder Austreten aus dem Flugzeugsitzbereich vorteilhaft vereinfacht werden. Des Weiteren kann durch diese Ausgestaltung eine Verletzungsgefahr für den Passagier vorteilhaft gering gehalten werden. Zudem kann das zumindest eine weitere Trennelement durch diese Ausgestaltung besonders vorteilhaft ausgerichtet werden, um einen effizienten Gesundheitsschutz zu erreichen. Vorzugsweise ist das zumindest eine weitere Trennelement schwenkbar an dem zumindest einen Trennelement angebracht. Bevorzugt ist eine Schwenkachse, um die das zumindest eine weitere Trennelement schwenkbar gelagert ist, quer zu der Sitzrichtung ausgerichtet. Vorzugsweise ist die Schwenkachse von der Rückenlehne in Sitzrichtung beabstandet. Vorzugsweise weist die zumindest eine Infektionsschutztrenneinheit zumindest eine Lagereinheit auf, die dazu vorgesehen ist, das zumindest eine weitere Trennelement schwenkbar an dem zumindest einen Trennelement zu lagern. Bevorzugt ist die zumindest eine Lagereinheit dazu vorgesehen, das zumindest eine weitere Trennelement in definierten Stellungen zu halten. Vorzugsweise ist das zumindest eine weitere Trennelement reversibel biegbar ausgebildet. Bevorzugt ist das zumindest eine weitere Trennelement dazu vorgesehen, zumindest teilweise in den Flugzeugsitzbereich hinein oder aus dem Flugzeugsitzbereich hinaus gebogen zu werden. Bevorzugt ist das zumindest eine weitere Trennelement nach einer Biegeverformung formstabil ausgebildet.

Zudem wird vorgeschlagen, dass die zumindest eine Infektionsschutztrenneinheit zumindest ein weiteres Trennelement aufweist, welches mit dem zumindest einen Trennelement verbunden und ausziehbar in Richtung einer Armlehne des zumindest einen Flugzeugsitzes ausgebildet ist. Durch diese Ausgestaltung kann eine vorteilhaft große Abtrennung des Flugzeugsitzbereichs von einem benachbarten Flugzeugsitzbereich erreicht werden. Dadurch kann eine Durchmischung von Luft in einer Richtung quer zur Sitzrichtung vorteilhaft vermieden werden. Zudem kann durch diese Ausgestaltung vorteilhaft erreicht werden, dass der Luftstrom des Belüftungssystems den Flugzeugsitzbereich, insbesondere den Kopfbereich, definiert in einer vertikalen Richtung durchdringt. Dabei kann kontaminierte Luft vorteilhaft sicher aus dem Flugzeugsitzbereich abgeführt werden, ohne dass diese in einen benachbarten Kopfbereich geführt wird. Dadurch kann ein Gesundheitsschutz vorteilhaft verbessert werden. Bevorzugt ist das zumindest eine weitere Trennelement trapezförmig ausgebildet. Vorzugsweise ist das zumindest eine weitere Trennelement als ein Rolloelement und/oder als ein Plisseeelement ausgebildet. Bevorzugt ist das zumindest eine weitere Trennelement an einer Unterseite des zumindest einen Trennelements angeordnet. Bevorzugt ist das zumindest eine weitere Trennelement in dem zumindest einen Trennelement integriert. Vorzugsweise ist das zumindest eine weitere Trennelement dazu vorgesehen, bis zu der Armlehne des zumindest einen Flugzeugsitzes geführt zu werden. Besonders bevorzugt ist das zumindest eine weitere Trennelement dazu vorgesehen, mit der Armlehne des zumindest einen Flugzeugsitzes gekoppelt zu werden.

Die Flugzeugsitzvorrichtung umfasst zumindest den einen weiteren Flugzeugsitz, welcher gemeinsam mit dem zumindest einen Flugzeugsitz in einer Sitzreihe angeordnet ist, wobei die zumindest eine Infektionsschutztrenneinheit mit der Rückenlehne des zumindest einen Flugzeugsitzes und mit einer weiteren Rückenlehne des zumindest einen weiteren Flugzeugsitzes gekoppelt ist. Durch diese Ausgestaltung kann eine vorteilhafte Abtrennung des Flugzeugsitzbereichs zu einem benachbarten Flugzeugsitzbereich ermöglicht werden, der hinter dem Flugzeugsitzbereich, insbesondere hinter der Rückenlehne, angeordnet ist. Dadurch kann ein Gesundheitsschutz für einen Passagier vorteilhaft verbessert werden Besonders bevorzugt bilden der zumindest eine Flugzeugsitz und der zumindest eine weitere Flugzeugsitz eine Sitzbank aus. Bevorzugt erstreckt sich die Sitzreihe, insbesondere die Sitzbank, quer zu einer Flugrichtung des Flugzeugs. Vorzugsweise sind der zumindest eine Flugzeugsitz und der zumindest eine weitere Flugzeugsitz unmittelbar nebeneinander angeordnet. Bevorzugt sind der zumindest eine Flugzeugsitz und der zumindest eine weitere Flugzeugsitz gemeinsam über die Aufständereinheit auf der Aufständerebene aufgeständert. Vorzugsweise ist die zumindest eine Infektionsschutztrenneinheit zumindest teilweise, besonders bevorzugt zumindest im Wesentlichen, zwischen der Rückenlehne des zumindest einen Flugzeugsitzes und der weiteren Rückenlehne des zumindest einen weiteren Flugzeugsitzes angeordnet.

Ferner wird vorgeschlagen, dass die zumindest eine Infektionsschutztrenneinheit zumindest ein Befestigungselement aufweist, das zur Befestigung der Infektionsschutztrenneinheit dazu vorgesehen ist, zwischen der Rückenlehne des zumindest einen Flugzeugsitzes und der weiteren Rückenlehne des zumindest einen weiteren Flugzeugsitzes angeordnet zu werden. Durch diese Ausgestaltung kann eine vorteilhaft einfache und schnelle Montage der zumindest einen Infektionsschutztrenneinheit erfolgen. Besonders bevorzugt ist die zumindest eine Infektionsschutztrenneinheit dazu vorgesehen, zwischen die Rückenlehne des zumindest einen Flugzeugsitzes und die weitere Rückenlehne des zumindest einen weiteren Flugzeugsitzes geschoben zu werden. Vorzugsweise ist das zumindest eine Befestigungselement dazu vorgesehen, einen Freiraum zwischen der Rückenlehne und der weiteren Rückenlehne zumindest zu einem Großteil auszufüllen. Unter "zumindest zu einem Großteil" soll insbesondere zumindest 55 %, bevorzugt zumindest 65 %, vorzugsweise zumindest 75 %, besonders bevorzugt zumindest 85 % und ganz besonders bevorzugt zumindest 95 %, einer gedachten Fläche, insbesondere zwischen der Rückenlehne und der weiteren Rückenlehne, verstanden werden. Grundsätzlich soll unter "zumindest einem Großteil" auch verstanden werden, dass das zumindest eine Befestigungselement dazu vorgesehen, den Freiraum zwischen der Rückenlehne und der weiteren Rückenlehne vollständig auszufüllen. Besonders bevorzugt ist das zumindest eine Befestigungselement dazu vorgesehen, den Freiraum zwischen der Rückenlehne und der weiteren Rückenlehne oberhalb der zumindest einen Armlehne bis zu der Oberkante der Rückenlehne zumindest zu einem Großteil auszufüllen. Grundsätzlich ist es auch denkbar, dass das zumindest eine Befestigungselement dazu vorgesehen, den Freiraum zwischen der Rückenlehne und der weiteren Rückenlehne oberhalb der zumindest einen Armlehne bis zu der Oberkante der Rückenlehne vollständig auszufüllen. Vorzugsweise ist die Rückenlehne unverstellbar ausgebildet. Besonders bevorzugt ist eine Neigung der Rückenlehne fest vorgegeben und nicht durch einen Passagier anpassbar. Vorzugsweise ist das zumindest eine Trennelement fest mit dem zumindest einen Befestigungselement verbunden. Besonders bevorzugt sind das zumindest eine Befestigungselement und das zumindest eine Trennelement einstückig miteinander ausgebildet. Unter "einstückig" soll vorzugsweise zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Besonders bevorzugt ist das zumindest eine Trennelement plattenförmig ausgebildet. Vorzugsweise erstreckt sich das zumindest eine Trennelement zumindest im Wesentlichen in der Sitzrichtung des zumindest einen Flugzeugsitzes. Besonders bevorzugt ist die zumindest eine Infektionsschutztrenneinheit werkzeuglos zwischen der Rückenlehne und der weiteren Rückenlehne montierbar und demontierbar.

Zudem wird vorgeschlagen, dass das zumindest eine Befestigungselement eine Nut und eine weitere Nut aufweist, wobei die Nut dazu vorgesehen ist, die Rückenlehne des zumindest einen Flugzeugsitzes teilweise aufzunehmen und die weitere Nut dazu vorgesehen ist, die weitere Rückenlehne des zumindest einen weiteren Flugzeugsitzes teilweise aufzunehmen. Durch diese Ausgestaltung kann eine vorteilhaft einfache Nachrüstbarkeit erreicht werden, da vorzugsweise keine Montagemittel an dem Flugzeugsitz und/oder dem weiteren Flugzeugsitz angebracht werden müssen. Des Weiteren kann eine vorteilhaft einfache und schnelle Montage der zumindest einen Infektionsschutztrenneinheit erfolgen. Des Weiteren kann die zumindest eine Infektionsschutztrenneinheit bei Beschleunigungen in Flugrichtung mittels der Nut und der weiteren Nut vorteilhaft sicher an der Rückenlehne und an der weiteren Rückenlehne gehalten werden. Dadurch kann ein vorteilhaft zuverlässiger Infektionsschutz bereitgestellt werden. Unter "aufnehmen" soll vorzugsweise verstanden werden, dass sich die Rückenlehne in einem seitlichen Bereich der Rückenlehne in die Nut und die weitere Rückenlehne in einem seitlichen Bereich der weiteren Rückenlehne in die weitere Nut hinein erstreckt. Bevorzugt ist der seitliche Bereich der weiteren Rückenlehne dem seitlichen Bereich der Rückenlehne zugewandt. Besonders bevorzugt bildet die Rückenlehne einen Anbindungsbereich aus, wobei die Nut den Anbindungsbereich umgreift. Bevorzugt ist der Anbindungsbereich in dem seitlichen Bereich der Rückenlehne angeordnet. Besonders bevorzugt bildet die weitere Rückenlehne einen weiteren Anbindungsbereich aus, wobei die weitere Nut den weiteren Anbindungsbereich umgreift. Bevorzugt ist der weitere Anbindungsbereich in dem seitlichen Bereich der weiteren Rückenlehne angeordnet. Vorzugsweise ist das Befestigungselement zumindest in einer Richtung, insbesondere der Sitzrichtung, in einer Ebene parallel zu der Aufständerebene formschlüssig zwischen der Rückenlehne und der weiteren Rückenlehne gelagert. Vorzugsweise weist die Rückenlehne eine Haupterstreckungsebene auf. Unter einer "Haupterstreckungsebene" soll vorzugsweise eine Ebene verstanden werden, welche parallel zu einer größten Seitenfläche eines kleinsten gedachten Quaders ist, welcher ein Bauteil gerade noch vollständig umschließt, und insbesondere durch den Mittelpunkt des Quaders verläuft. Besonders bevorzugt sind die Nut und die weitere Nut zumindest im Wesentlichen parallel zu der Haupterstreckungsebene der Rückenlehne ausgerichtet. Grundsätzlich wäre es auch denkbar, dass die Nut und die weitere Nut jeweils gekrümmt ausgebildet sind.

Die zumindest eine Infektionsschutztrenneinheit weist zumindest ein Trennelement auf, das dazu vorgesehen ist, den Freiraum zwischen der Rückenlehne des zumindest einen Flugzeugsitzes und der weiteren Rückenlehne des zumindest einen weiteren Flugzeugsitzes zumindest zu einem Großteil auszufüllen. Durch diese Ausgestaltung kann eine Durchmischung von Luft in einer Richtung parallel zur Sitzrichtung vorteilhaft vermieden werden. Des Weiteren kann durch diese Ausgestaltung vorteilhaft erreicht werden, dass von einem hinter dem Flugzeugsitz sitzenden Passagier ausgeatmete Luft von einem Eindringen in den Flugzeugsitzbereich abgehalten wird. Dadurch kann ein Gesundheitsschutz vorteilhaft verbessert werden. Besonders bevorzugt ist das zumindest eine Trennelement dazu vorgesehen, den Freiraum zwischen der Rückenlehne und der weiteren Rückenlehne oberhalb der zumindest einen Armlehne bis zu der Oberkante der Rückenlehne zumindest zu einem Großteil auszufüllen. Unter "zumindest zu einem Großteil" soll insbesondere zumindest 55 %, bevorzugt zumindest 65 %, vorzugsweise zumindest 75 %, besonders bevorzugt zumindest 85 % und ganz besonders bevorzugt zumindest 95 %, einer gedachten Fläche, insbesondere zwischen der Rückenlehne und der weiteren Rückenlehne, verstanden werden. Grundsätzlich soll unter "zumindest einem Großteil" auch verstanden werden, dass das zumindest eine Trennelement dazu vorgesehen, den Freiraum zwischen der Rückenlehne und der weiteren Rückenlehne vollständig auszufüllen. Vorzugsweise ist die Rückenlehne verstellbar ausgebildet. Besonders bevorzugt ist eine Neigung der Rückenlehne durch einen Passagier anpassbar.

Zudem wird vorgeschlagen, dass die zumindest eine Infektionsschutztrenneinheit zumindest ein mit der Rückenlehne koppelbares Befestigungselement aufweist, wobei das zumindest eine Trennelement an einem oberen Ende des zumindest einen Trennelements über das zumindest eine Befestigungselement an die Rückenlehne angebunden ist. Durch diese Ausgestaltung kann eine vorteilhaft zuverlässige Befestigung des zumindest einen Trennelements auf einer Höhe des Kopfbereichs erreicht werden. Dadurch kann ein vorteilhaft zuverlässiger Gesundheitsschutz erreicht werden. Bevorzugt ist das zumindest eine Befestigungselement fest mit der Rückenlehne verbunden. Vorzugsweise soll darunter auch verstanden werden, dass das zumindest eine Befestigungselement fest mit einer mit der Rückenlehne verbundenen Kopfstütze, fest mit zumindest einem Bezugselement der Rückenlehne und/oder fest mit zumindest einer Verkleidung der Rückenlehne verbunden ist. Vorzugsweise ist das zumindest eine Befestigungselement kraftschlüssig, formschlüssig und/oder stoffschlüssig mit einem Grundrahmen der Rückenlehne und/oder an der Verkleidung der Rückenlehne angeordnet. Unter "kraftschlüssig und/oder formschlüssig verbunden" soll dabei vorzugsweise eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Unter "stoffschlüssig verbunden" soll vorzugsweise verstanden werden, dass Bauteile durch atomare oder molekulare Kräfte zusammengehalten werden, wie beispielsweise beim Löten, Schweißen, Kleben und/oder Vulkanisieren.

Des Weiteren wird vorgeschlagen, dass die zumindest eine Infektionsschutztrenneinheit zumindest ein weiteres Befestigungselement aufweist, welches das zumindest eine Trennelement fest mit einem Sitzteiler verbindet. Durch diese Ausgestaltung kann das zumindest eine Trennelement bis auf eine Höhe der Sitzbodeneinheit oder bis in auf eine Höhe unterhalb der Sitzbodeneinheit reichen. Dadurch kann eine vorteilhaft große Abdeckung des Freiraums auch in einem Bereich des Sitzteilers ermöglicht werden. Dadurch kann vorteilhaft erreicht werden, dass von einem hinter dem Flugzeugsitz sitzenden Passagier ausgeatmete Luft von einem Eindringen in den Flugzeugsitzbereich abgehalten wird. Dadurch kann ein Gesundheitsschutz vorteilhaft verbessert werden. Vorzugsweise ist der Sitzteiler zwischen dem zumindest einen Flugzeugsitz und dem zumindest einen weiteren Flugzeugsitz angeordnet. Vorzugsweise ist das zumindest eine weitere Befestigungselement an einer Rückseite des Sitzteilers, insbesondere in einem Kniebereich eines hinter dem Flugzeugsitz sitzenden Passagiers, angeordnet. Vorzugsweise verbindet das zumindest eine weitere Befestigungselement das zumindest eine Trennelement mit wenigstens einem Achselement, welches direkt mit dem Sitzteiler verbunden ist. Bevorzugt ist das wenigstens eine Achselement dazu vorgesehen, eine Drehachse für eine Rückenlehnenverschwenkung und/oder eine Drehachse für zumindest einen Lagerarm einer Tischeinheit bereitzustellen.

Ferner wird vorgeschlagen, dass das zumindest eine Trennelement einstückig mit zumindest einem Bezugselement der Rückenlehne und/oder mit zumindest einem weiteren Bezugselement der weiteren Rückenlehne ausgebildet ist. Durch diese Ausgestaltung wird vorteilhaft ermöglicht, dass zwischen hintereinander angeordneten Sitzreihen keine wesentlichen Freiräume vorhanden sind, die durchlässig für Aerosole wären. Dadurch kann ein besonders vorteilhafter Infektionsschutz ermöglicht werden. Vorzugsweise ist das zumindest eine Trennelement mit dem zumindest einen Bezugselement und mit dem zumindest einen weiteren Bezugselement vernäht. Bevorzugt ist das zumindest eine Bezugselement aus einem Textil und/oder einem Leder, insbesondere Kunstleder, gebildet. Vorzugsweise weist das zumindest eine Bezugselement eine antivirale und/oder antibakterielle Beschichtung auf.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind neun Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Flugzeugsitzvorrichtung in einem Ausführungsbeispiel, das nicht mehr von der Erfindung umfasst wird,
- Fig. 2: eine schematische Darstellung einer Flugzeugsitzvorrichtung in einem Ausführungsbeispiel, das nicht mehr von der Erfindung umfasst wird,
- Fig. 3: eine schematische Darstellung einer Infektionsschutztrenneinheit der Flugzeugsitzvorrichtung in dem nicht erfindungsgemäßen Ausführungsbeispiel,
- Fig. 4: eine schematische Darstellung einer Flugzeugsitzvorrichtung in einem Ausführungsbeispiel, das nicht mehr von der Erfindung umfasst wird,
- Fig. 5: eine schematische Darstellung der Flugzeugsitzvorrichtung in dem nicht erfindungsgemäßen Ausführungsbeispiel,
- Fig. 6: eine schematische Darstellung einer Flugzeugsitzvorrichtung in einem Ausführungsbeispiel, das nicht mehr von der Erfindung umfasst wird,
- Fig. 7: eine schematische Darstellung einer Flugzeugsitzvorrichtung in einem Ausführungsbeispiel, das nicht mehr von der Erfindung umfasst wird,
- Fig. 8: eine schematische Darstellung einer Variation der Flugzeugsitzvorrichtung in dem nicht erfindungsgemäßen Ausführungsbeispiel,
- Fig. 9: eine schematische Darstellung einer erfindungsgemäßen Flugzeugsitzvorrichtung in einem sechsten Ausführungsbeispiel,
- Fig. 10: eine schematische Darstellung einer erfindungsgemäßen Flugzeugsitzvorrichtung in einem siebten Ausführungsbeispiel,
- Fig. 11: eine schematische Detailansicht eines Teilaufbruchs der erfindungsgemäßen Flugzeugsitzvorrichtung,
- Fig. 12: eine schematische Darstellung einer erfindungsgemäßen Flugzeugsitzvorrichtung in einem achten Ausführungsbeispiel,
- Fig. 13: eine schematische Darstellung einer erfindungsgemäßen Flugzeugsitzvorrichtung in einem neunten Ausführungsbeispiel und
- Fig. 14: eine schematische Darstellung der erfindungsgemäßen Flugzeugsitzvorrichtung in dem neunten Ausführungsbeispiel.

### Beschreibung der Ausführungsbeispiele

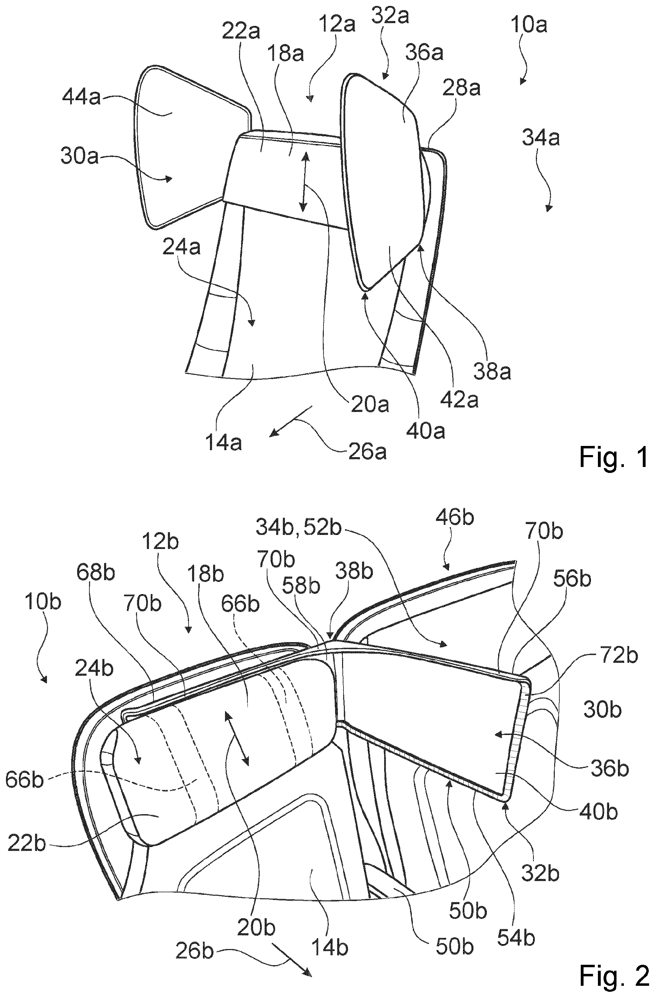

In der Figur 1 ist eine Flugzeugsitzvorrichtung 10a in einem ersten, nicht erfindungsgemäßen Ausführungsbeispiel gezeigt. Die Flugzeugsitzvorrichtung 10a ist dazu vorgesehen, in einer nicht näher dargestellten Flugzeugkabine eines Flugzeugs angeordnet zu werden. Die Flugzeugsitzvorrichtung 10a weist eine nicht näher dargestellte Aufständereinheit auf.

Die Flugzeugsitzvorrichtung 10a umfasst im vorliegenden Fall einen Flugzeugsitz 12a. Der Flugzeugsitz 12a ist als ein Economy-Class-Flugzeugsitz ausgebildet. Die Aufständereinheit ist dazu vorgesehen, den Flugzeugsitz 12a auf einer Aufständerebene aufzuständern. Ein Flugzeugkabinenboden der Flugzeugkabine bildet die Aufständerebene aus. Der Flugzeugsitz 12a ist Teil einer nicht näher dargestellten Sitzreihe. Der Flugzeugsitz 12a weist eine Rückenlehne 14a auf. Die Rückenlehne 14a ist mit der Aufständereinheit gekoppelt. Der Flugzeugsitz 12a weist eine nicht näher dargestellte Sitzbodeneinheit auf. Die Sitzbodeneinheit bildet eine Sitzfläche für einen auf dem Flugzeugsitz 12a sitzenden Passagier aus. Die Sitzbodeneinheit ist mit der Aufständereinheit gekoppelt. Der Flugzeugsitz 12a weist eine Kopfstütze 18a auf. Die Kopfstütze 18a ist an der Rückenlehne 14a angeordnet. Die Kopfstütze 18a ist beweglich an der Rückenlehne 14a gelagert. Alternativ wäre es auch denkbar, dass die Kopfstütze 18a unbeweglich an der Rückenlehne 14a angeordnet ist. Die Kopfstütze 18a ist in einer Richtung 20a zumindest im Wesentlichen orthogonal zu der Aufständerebene in einem definierten Bereich verschiebbar. Die Kopfstütze 18a weist ein Bezugselement 22a auf. Das Bezugselement 22a der Kopfstütze 18a ist aus einem Textil, insbesondere einem Stoff, oder aus einem Leder, insbesondere einem Kunstleder, ausgebildet.

Die Flugzeugsitzvorrichtung 10a weist zumindest einen nicht näher dargestellten Sitzteiler auf. Der zumindest eine Sitzteiler ist mit der Aufständereinheit gekoppelt. Der zumindest eine Sitzteiler ist unmittelbar neben dem Flugzeugsitz 12a angeordnet. Die Flugzeugsitzvorrichtung 10a weist zumindest eine nicht näher dargestellte Armlehne auf, die an dem zumindest einen Sitzteiler angeordnet ist.

Der Flugzeugsitz 12a bildet einen Flugzeugsitzbereich 24a aus. Der Flugzeugsitzbereich 24a steht einem auf dem Flugzeugsitz 12a sitzenden Passagier, insbesondere einem Oberkörper des Passagiers, bei einer gewöhnlichen Sitzhaltung persönlich zur Verfügung. Der Flugzeugsitzbereich 24a ist idealisiert quaderförmig ausgebildet. Der Flugzeugsitzbereich 24a ist von der Rückenlehne 14a in zumindest einer Richtung, die insbesondere entgegen einer Sitzrichtung 26a des Flugzeugsitzes 12a gerichtet ist, begrenzt. Der Flugzeugsitzbereich 24a erstreckt sich in einer Ebene parallel zu der Aufständerebene betrachtet über eine gesamte Fläche des Flugzeugsitzes 12a, insbesondere über eine gesamte Fläche der Sitzbodeneinheit und über eine gesamte Fläche einer auf der Vorderseite der Rückenlehne 14a angeordneten Rückenabstützfläche der Rückenlehne 14a. Die zumindest eine Armlehne begrenzt den Flugzeugsitzbereich 24a in wenigstens einer Richtung, die insbesondere quer zu der Sitzrichtung 26a des Flugzeugsitzes 12a ausgerichtet ist. Der Flugzeugsitzbereich 24a erstreckt sich in einer Ebene orthogonal zu der Aufständerebene betrachtet zumindest zwischen der Sitzbodeneinheit und einer Oberkante 28a der Rückenlehne 14a. Der Flugzeugsitzbereich 24a ist entgegen der Sitzrichtung 26a betrachtet durch die Rückenlehne 14a des Flugzeugsitzes 12a, insbesondere durch die Rückenabstützfläche der Rückenlehne 14a, begrenzt. Die Oberkante 28a der Rückenlehne 14a definiert einen Punkt der Rückenlehne 14a, welcher am weitesten von der Aufständerebene entfernt ist. Grundsätzlich wäre es denkbar, dass sich der Flugzeugsitzbereich 24a bis zu einer vor dem Flugzeugsitz 12a angeordneten Flugzeugkabinentrennwand oder bis zu einer vor dem Flugzeugsitz 12a angeordneten weiteren Rückenlehne erstreckt.

Der Flugzeugsitz 12a bildet einen Kopfbereich 30a aus. Der Kopfbereich 30a ist als ein Teilbereich des Flugzeugsitzbereichs 24a ausgebildet. In dem Kopfbereich 30a ist ein Kopf des Passagiers bei einer gewöhnlichen Sitzhaltung angeordnet. Eine Position des Kopfbereichs 30a ist abhängig von einer Körpergröße des Passagiers. Der Kopfbereich 30a erstreckt sich von einem Hals des Passagiers bis zu einem obersten Punkt des Kopfes des Passagiers. Der Kopfbereich 30a ist in einer Ebene parallel zu der Aufständerebene betrachtet zumindest im Wesentlichen gleich groß wie der Flugzeugsitzbereich 24a. Der Kopfbereich 30a ist als ein Ausschnitt des Flugzeugsitzbereichs 24a ausgebildet. Der Ausschnitt ist quaderförmig ausgebildet. Der Kopfbereich 30a ist von einer gedachten unteren Ebene und von einer gedachten oberen Ebene begrenzt. Der Kopf des Passagiers ist zwischen der unteren Ebene und der oberen Ebene angeordnet. Die untere Ebene schneidet den Hals des Passagiers. Die obere Ebene schneidet den obersten Punkt des Kopfes des Passagiers. Die untere Ebene und die obere Ebene sind parallel zu der Aufständerebene ausgerichtet. Die untere Ebene ist näher an der Aufständerebene angeordnet als die obere Ebene. Grundsätzlich wäre es auch denkbar, dass die untere Ebene einen untersten Punkt der Kopfstütze 18a schneidet und die obere Ebene einen obersten Punkt der Kopfstütze 18a.

Die Flugzeugsitzvorrichtung 10a weist eine Infektionsschutztrenneinheit 32a auf. Die Infektionsschutztrenneinheit 32a ist zu einer bereichsweise physischen Abtrennung des Flugzeugsitzbereichs 24a gegenüber einer Umgebung 34a des Flugzeugsitzbereichs 24a vorgesehen. Die Umgebung 34a des Flugzeugsitzbereichs 24a ist als ein Bereich außerhalb des Flugzeugsitzbereichs 24a ausgebildet. Die Umgebung 34a ist als ein nicht näher dargestellter weiterer Flugzeugsitzbereich und/oder ein nicht näher dargestellter Flugzeugkabinengangbereich ausgebildet. Die physische Abtrennung ist dazu vorgesehen, eine Infektion eines Passagiers mit einem Krankheitserreger zu vermeiden. Krankheitserreger können durch Ausatmen und/oder Aushusten des Passagiers in die Luft des Flugzeugsitzbereichs 24a, insbesondere des Kopfbereichs 30a, befördert werden. Krankheitserreger können durch Ausatmen und/oder Aushusten eines weiteren Passagiers oder eines Crewmitglieds in die Luft der Umgebung 34a befördert werden. Die Infektionsschutztrenneinheit 32a ist dazu vorgesehen, in der Luft der Umgebung 34a befindliche Krankheitserreger von einem Eindringen in den Kopfbereich 30a abzuhalten. Die Infektionsschutztrenneinheit 32a ist dazu vorgesehen, ein Verlassen von in der Luft des Flugzeugsitzbereichs 24a, insbesondere des Kopfbereichs 30a, befindlichen Krankheitserregern zu vermeiden und/oder zu verhindern. Die Infektionsschutztrenneinheit 32a ist dazu vorgesehen, den Flugzeugsitzbereich 24a in dem Kopfbereich 30a von der Umgebung 34a des Flugzeugsitzbereichs 24a, insbesondere von dem weiteren Flugzeugsitzbereich und/oder dem Flugzeugkabinengangbereich, abzutrennen.

Die Infektionsschutztrenneinheit 32a ist an der Rückenlehne 14a des Flugzeugsitzes 12a angeordnet. Die Infektionsschutztrenneinheit 32a ist an der Kopfstütze 18a des Flugzeugsitzes 12a angeordnet. Die Infektionsschutztrenneinheit 32a ist fest mit der Kopfstütze 18a des Flugzeugsitzes 12a verbunden. Die Infektionsschutztrenneinheit 32a ist beweglich zu der Rückenlehne 14a gelagert. Die Infektionsschutztrenneinheit 32a ist in der Richtung 20a zumindest im Wesentlichen orthogonal zu der Aufständerebene gemeinsam mit der Kopfstütze 18a bewegbar. Die Infektionsschutztrenneinheit 32a ist in der Richtung 20a zumindest im Wesentlichen orthogonal zu der Aufständerebene in demselben definierten Bereich wie die Kopfstütze 18a verschiebbar.

Die Infektionsschutztrenneinheit 32a weist ein Trennelement 36a auf. Das Trennelement 36a ist dazu vorgesehen, eine physische Barriere bereitzustellen. Das Trennelement 36a ist zu einer physischen Abtrennung des Kopfbereichs 30a gegenüber der Umgebung 34a des Flugzeugsitzbereichs 24a vorgesehen. Das Trennelement 36a ist dazu vorgesehen, in der Luft der Umgebung 34a befindliche Krankheitserreger von einem Eindringen in den Kopfbereich 30a abzuhalten. Das Trennelement 36a ist dazu vorgesehen, ein Verlassen von in der Luft des Kopfbereichs 30a befindlichen Krankheitserregern zu vermeiden und/oder zu verhindern. Das Trennelement 36a ist dazu vorgesehen, den Flugzeugsitzbereich 24a in dem Kopfbereich 30a von der Umgebung 34a des Flugzeugsitzbereichs 24a, insbesondere von dem weiteren Flugzeugsitzbereich und/oder dem Flugzeugkabinengangbereich, abzutrennen. Das Trennelement 36a ist plattenförmig ausgebildet. Das Trennelement 36a weist eine trapezförmige Grundform auf. Das Trennelement 36a erstreckt sich zumindest im Wesentlichen in der Sitzrichtung 26a des Flugzeugsitzes 12a. Das Trennelement 36a erstreckt sich in der Sitzrichtung 26a um mindestens 30 cm von der Rückenlehne 14a weg. Eine Haupterstreckungsebene des Trennelements 36a ist zumindest im Wesentlichen orthogonal zu der Aufständerebene ausgerichtet. Die Haupterstreckungsebene des Trennelements 36a ist zumindest im Wesentlichen parallel zu der Sitzrichtung 26a ausgerichtet. Das Trennelement 36a ist im vorliegenden Fall starr ausgebildet. Alternativ wäre es jedoch denkbar, dass das Trennelement 36a zumindest teilweise flexibel ausgebildet ist. Das Trennelement 36a ist über die Kopfstütze 18a beweglich zu der Rückenlehne 14a gelagert. Das Trennelement 36a ist seitlich an der Kopfstütze 18a angeordnet. Das Trennelement 36a ist einstückig mit der Kopfstütze 18a ausgebildet. Alternativ wäre es denkbar, dass das Trennelement 36a nachrüstbar an der Kopfstütze 18a angebracht werden kann. Das Trennelement 36a weist ein festes Ende 38a auf, welches mit der Kopfstütze 18a starr verbunden ist. Das Trennelement 36a weist ein freies Ende 40a auf, welches von dem festen Ende 38a in der Sitzrichtung 26a beabstandet ist. Das Trennelement 36a weist an dem freien Ende 40a eine vertikale Erstreckung auf, die größer ist als eine vertikale Erstreckung an dem festen Ende 38a. Das Trennelement 36a erstreckt sich zumindest teilweise über die Oberkante 28a der Rückenlehne 14a hinaus. Das Trennelement 36a erstreckt sich an dem freien Ende 40a über die Oberkante 28a der Rückenlehne 14a hinaus. Das Trennelement 36a weist ein Bezugselement 42a auf. Das Bezugselement 42a des Trennelements 36a ist aus einem Textil, insbesondere einem Stoff, oder aus einem Leder, insbesondere einem Kunstleder, ausgebildet. Das Trennelement 36a ist schwer entflammbar ausgebildet. Das Bezugselement 42a des Trennelements 36a ist aus einem gleichen Material wie das Bezugselement 22a der Kopfstütze 18a ausgebildet. Das Trennelement 36a ist in der Richtung 20a zumindest im Wesentlichen orthogonal zu der Aufständerebene gemeinsam mit der Kopfstütze 18a bewegbar. Das Trennelement 36a ist in der Richtung 20a zumindest im Wesentlichen orthogonal zu der Aufständerebene in demselben definierten Bereich wie die Kopfstütze 18a verschiebbar.

Das Trennelement 36a umfasst viruzide Eigenschaften. Unter "viruziden Eigenschaften" sollen vorzugsweise Eigenschaften des Trennelements 36a verstanden werden, mittels denen eine virale Nukleinsäure zerstörbar ist, insbesondere eine Virushülle denaturiert oder entfernt werden kann, wobei die Infektiosität von Viren herabgesetzt oder vollständig verhindert wird. Viruzide Eigenschaften ermöglichen vorteilhaft eine Virusinaktivierung. Dadurch kann ein besonders vorteilhafter Gesundheitsschutz ermöglicht werden. Vorteilhaft können auch weitere Einheiten und/oder Elemente des Flugzeugsitzes 12a, insbesondere die Sitzbodeneinheit, die Rückenlehne 14a und/oder eine nicht näher dargestellte Tischeinheit des Flugzeugsitzes 12a, zumindest bereichsweise viruzide Eigenschaften aufweisen. Diese können identisch mit denen des Trennelements 36a ausgebildet sein.

Grundsätzlich wäre es denkbar, dass das Trennelement 36a eine Beschichtung aufweist, die viruzid ausgebildet ist. Die Beschichtung ist selbstdesinfizierend ausgebildet. Die Beschichtung ist auf eine Oberfläche des Trennelements 36a aufgebracht.

Des Weiteren wäre es denkbar, dass das Trennelement 36a eine glatte Oberfläche aufweist, die eine Ablagerung von Schmutz, Viren, Keimen und/oder Bakterien auf dem Trennelement 36a und/oder dem Bezugselement 42a des Trennelements 36a vermeidet. Dadurch kann eine vorteilhaft einfache und effiziente Reinigung und/oder Desinfektion des Trennelements 36a ermöglicht werden.

Alternativ oder zusätzlich wäre es denkbar, dass das Trennelement 36a eine Folie aufweist. Dabei wäre es denkbar, dass die Folie das Bezugselement 42a des Trennelements 36a ersetzt. Die Folie des Trennelements 36a könnte von dem Trennelement 36a, insbesondere werkzeuglos, abziehbar und/oder abnehmbar ausgebildet sein. Dadurch kann ein vorteilhaft schneller Austausch der Folie an dem Trennelement 36a erfolgen.

Grundsätzlich wäre es auch denkbar, dass die Infektionsschutztrenneinheit 32a zumindest ein nicht näher dargestelltes Desinfektionsmodul aufweist, das dazu vorgesehen ist, das Trennelement 36a selbststätig zu desinfizieren. Hierbei wäre es denkbar, dass das Desinfektionsmodul ein Desinfektionsmittel auf das Bezugselement 42a des Trennelements 36a oder auf das Trennelement 36a selbst aufbringt. Dabei wäre es auch denkbar, dass das Desinfektionsmodul in das Trennelement 36a integriert ist. Alternativ oder zusätzlich wäre es denkbar, dass das Desinfektionsmodul zumindest eine UV-Lichtquelle aufweist, die dazu vorgesehen ist, die Infektionsschutztrenneinheit 32a und/oder den Flugzeugsitz 12a definiert mit UV-Licht zu bestrahlen. Dabei wäre es denkbar, dass das Desinfektionsmodul auch weitere, benachbarte Flugzeugsitze definiert bestrahlt.

Die Infektionsschutztrenneinheit 32a weist ein weiteres Trennelement 44a auf. Das weitere Trennelement 44a ist bis auf eine gespiegelte Ausführung zu dem Trennelement 36a identisch zu dem Trennelement 36a ausgebildet. Eine Haupterstreckungsebene des weiteren Trennelements 44a ist zumindest im Wesentlichen parallel zu der Haupterstreckungsebene des Trennelements 36a ausgerichtet. Das Trennelement 36a, die Kopfstütze 18a und das weitere Trennelement 44a bilden gemeinsam eine U-Form aus, die den Kopfbereich 30a umgibt.

Grundsätzlich wäre es auch denkbar, dass die Infektionsschutztrenneinheit 32a zumindest ein Lichtmodul und/oder zumindest ein Beschallungsmodul aufweist. Das zumindest eine Lichtmodul und/oder das zumindest eine Beschallungsmodul können dabei in das Trennelement 36a und/oder in das weitere Trennelement 44a integriert sein. Das zumindest eine Lichtmodul kann beispielsweise als eine Leselampe oder als eine Stimmungsbeleuchtung ausgebildet sein. Das zumindest eine Beschallungsmodul kann beispielsweise als ein Lautsprecher ausgebildet sein, über den Audioinhalte eines In-Flight-Entertainment-Systems wiedergebbar sind. Dadurch kann ein vorteilhaft hoher Komfort für einen in dem Flugzeugsitzbereich 24a sitzenden Passagier ermöglicht werden.

In den Figuren 2 bis 12 sind acht weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur

Unterscheidung der Ausführungsbeispiele ist der Buchstabe a den Bezugszeichen des Ausführungsbeispiels in der Figur 1 nachgestellt. In den Ausführungsbeispielen der Figuren 2 bis 14 ist der Buchstabe a durch die Buchstaben b bis i ersetzt.

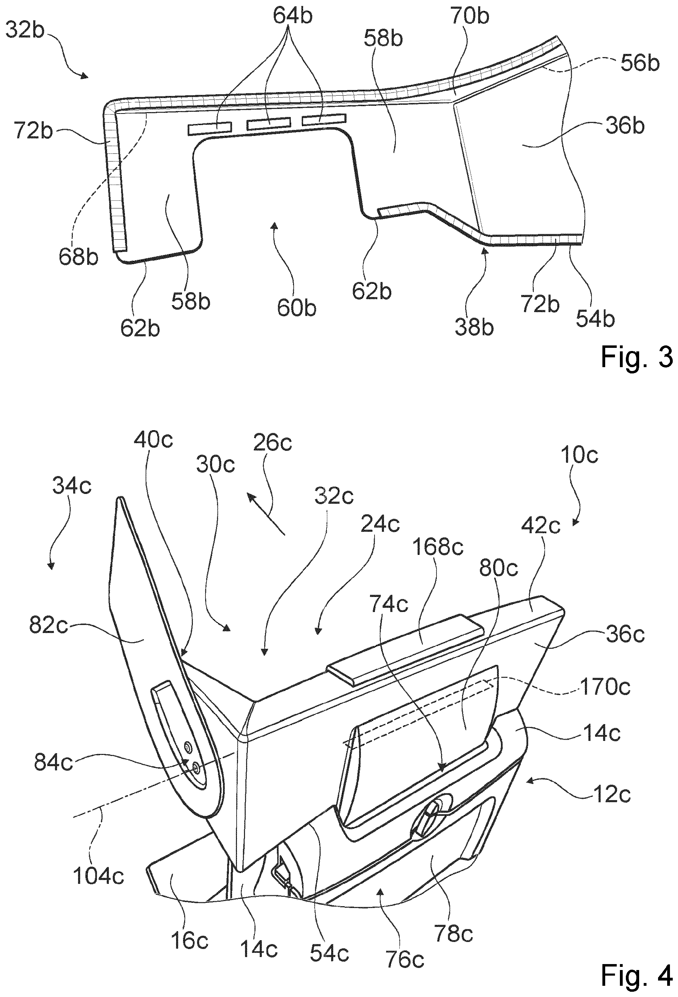

In den Figuren 2 und 3 ist eine Flugzeugsitzvorrichtung 10b in einem zweiten, nicht erfindungsgemäßen Ausführungsbeispiel gezeigt. Die Flugzeugsitzvorrichtung 10b weist eine nicht näher dargestellte Aufständereinheit auf. Die Flugzeugsitzvorrichtung 10b umfasst einen Flugzeugsitz 12b. Der Flugzeugsitz 12b weist eine Rückenlehne 14b auf. Der Flugzeugsitz 12b weist eine nicht näher dargestellte Sitzbodeneinheit auf. Der Flugzeugsitz 12b weist eine Sitzrichtung 26b auf. Der Flugzeugsitz 12b weist eine Kopfstütze 18b auf. Die Kopfstütze 18b ist beweglich an der Rückenlehne 14b gelagert. Die Kopfstütze 18b ist in einer Richtung 20b zumindest im Wesentlichen orthogonal zu der Aufständerebene in einem definierten Bereich verschiebbar. Die Kopfstütze 18b weist ein Bezugselement 22b auf. Der Flugzeugsitz 12b bildet einen Flugzeugsitzbereich 24b aus. Der Flugzeugsitz 12b bildet einen Kopfbereich 30b aus.

Die Flugzeugsitzvorrichtung 10b umfasst einen weiteren Flugzeugsitz 46b. Der weitere Flugzeugsitz 46b ist zumindest im Wesentlichen identisch zu dem Flugzeugsitz 12b ausgebildet. Der Flugzeugsitz 12b und der weitere Flugzeugsitz 46b bilden eine Sitzbank aus. Die Sitzbank erstreckt sich im vorliegenden Fall quer zu einer Flugrichtung des Flugzeugs. Der Flugzeugsitz 12b und der weitere Flugzeugsitz 46b sind unmittelbar nebeneinander angeordnet. Der Flugzeugsitz 12b und der weitere Flugzeugsitz 46b sind gemeinsam über die Aufständereinheit auf der Aufständerebene aufgeständert. Der Flugzeugsitz 12b und der weitere Flugzeugsitz 46b sind Teil einer nicht näher dargestellten Sitzreihe. Die Flugzeugsitzvorrichtung 10b weist zumindest einen nicht näher dargestellten Sitzteiler auf. Der Sitzteiler ist unmittelbar zwischen dem Flugzeugsitz 12b und dem weiteren Flugzeugsitz 46b angeordnet. Der Flugzeugsitz 12b und der weitere Flugzeugsitz 46b sind lediglich durch den Sitzteiler voneinander beabstandet. Die Flugzeugsitzvorrichtung 10b weist zumindest eine Armlehne 50b auf, die an dem zumindest einen Sitzteiler angeordnet ist. Die Armlehne 50b ist zwischen dem Flugzeugsitz 12b und dem weiteren Flugzeugsitz 46b angeordnet. Die Armlehne 50b ist schwenkbar ausgebildet.

Die Flugzeugsitzvorrichtung 10b weist eine Infektionsschutztrenneinheit 32b auf. Die Infektionsschutztrenneinheit 32b ist dazu vorgesehen, den Flugzeugsitzbereich 24b in dem Kopfbereich 30b von einer Umgebung 34b des Flugzeugsitzbereichs 24b, insbesondere von einem weiteren Flugzeugsitzbereich 52b des weiteren Flugzeugsitzes 46b, abzutrennen. Im vorliegenden Fall ist die Umgebung 34b als der weitere Flugzeugsitzbereich 52b des weiteren Flugzeugsitzes 46b ausgebildet. Die Infektionsschutztrenneinheit 32b ist an der Rückenlehne 14b des Flugzeugsitzes 12b angeordnet. Die Infektionsschutztrenneinheit 32b ist an der Kopfstütze 18b des Flugzeugsitzes 12b angeordnet. Die Infektionsschutztrenneinheit 32b ist fest mit der Kopfstütze 18b des Flugzeugsitzes 12b verbunden. Die Infektionsschutztrenneinheit 32b ist beweglich zu der Rückenlehne 14b gelagert. Die Infektionsschutztrenneinheit 32b ist in der Richtung 20b zumindest im Wesentlichen orthogonal zu der Aufständerebene gemeinsam mit der Kopfstütze 18b bewegbar.

Die Infektionsschutztrenneinheit 32b weist ein Trennelement 36b auf. Das Trennelement 36b ist von der Kopfstütze 18b abnehmbar ausgebildet. Das Trennelement 36b ist dazu vorgesehen, den Flugzeugsitzbereich 24b in dem Kopfbereich 30b von der Umgebung 34b des Flugzeugsitzbereichs 24b, insbesondere von dem weiteren Flugzeugsitzbereich 52b des Flugzeugsitzes 46b, abzutrennen. Das Trennelement 36b ist plattenförmig ausgebildet. Ein plattenförmiger Grundkörper des Trennelements 36b ist dünnwandig ausgebildet. Unter "dünnwandig" soll vorzugsweise eine zumindest im Wesentlichen konstante Materialstärke von höchstens 3 mm verstanden werden. Das Trennelement 36b weist eine rechteckige Grundform auf. Eine Haupterstreckungsebene des Trennelements 36b ist zumindest im Wesentlichen parallel zu der Sitzrichtung 26b ausgerichtet. Das Trennelement 36b weist ein festes Ende 38b auf, über das das Trennelement 36b mit der Kopfstütze 18b gekoppelt ist. Das Trennelement 36b weist ein freies Ende 40b auf, welches von dem festen Ende 38b in der Sitzrichtung 26b beabstandet ist. Das Trennelement 36b weist im vorliegenden Fall an dem freien Ende 40b eine vertikale Erstreckung auf, die zumindest im Wesentlichen gleich groß ist wie eine vertikale Erstreckung an dem festen Ende 38b. Das Trennelement 36b ist im vorliegenden Fall starr ausgebildet. Das Trennelement 36b ist aus einem Kunststoff, aus einem faserverstärkten Kunststoff oder aus einem Blech gebildet. Im vorliegenden Fall weist das Trennelement 36b kein Bezugselement auf. Grundsätzlich wäre es jedoch denkbar, dass das Trennelement 36b ein Bezugselement aufweist. Grundsätzlich wäre es denkbar, dass das Trennelement 36b transparent ausgebildet ist. Das Trennelement 36b ist seitlich neben der Kopfstütze 18b angeordnet. Das Trennelement 36b ist zumindest im Wesentlichen zwischen dem Flugzeugsitz 12b und dem weiteren Flugzeugsitz 46b angeordnet. Eine Achse orthogonal zu der Aufständerebene schneidet das Trennelement 36b und die Armlehne 50b. Der Kopfbereich 30b erstreckt sich zumindest von einer gedachten unteren Ebene, die eine Unterkante 54b des Trennelements 36b schneidet, und von einer gedachten oberen Ebene, die eine Oberkante 56b des Trennelements 36b schneidet. Im vorliegenden Fall schneidet die untere Ebene einen untersten Punkt der Kopfstütze 18b und die obere Ebene einen obersten Punkt der Kopfstütze 18b.

Gegenüber dem ersten Ausführungsbeispiel unterscheidet sich in dem zweiten Ausführungsbeispiel insbesondere eine Anbindung der Infektionsschutztrenneinheit 32b an der Kopfstütze 18b. Die Infektionsschutztrenneinheit 32b weist ein Befestigungselement 58b auf. Das Befestigungselement 58b ist dazu vorgesehen, das Trennelement 36b an die Kopfstütze 18b anzubinden. Das feste Ende 38b des Trennelements 36b ist mit dem Befestigungselement 58b starr verbunden ist. Das Befestigungselement 58b ist zwischen der Kopfstütze 18b und der Rückenlehne 14b angeordnet. Das Befestigungselement 58b kontaktiert die Kopfstütze 18b. Das Befestigungselement 58b ist von der Kopfstütze 18b abnehmbar ausgebildet. Das Befestigungselement 58b ist als ein zusätzliches Bauteil zu der Kopfstütze 18b ausgebildet. Das Befestigungselement 58b bildet die Kopfstütze 18b nicht aus. Das Befestigungselement 58b ist zumindest im Wesentlichen plattenförmig ausgebildet. Ein plattenförmiger Grundkörper des Befestigungselements 58b ist dünnwandig ausgebildet. Das Befestigungselement 58b und das Trennelement 36b sind einstückig miteinander ausgebildet. Eine Haupterstreckungsebene des Befestigungselements 58b ist zumindest im Wesentlichen orthogonal zu der Haupterstreckungsebene des Trennelements 36b ausgerichtet. Die Infektionsschutztrenneinheit 32b ist scharnierlos ausgebildet. Das Trennelement 36b ist unbeweglich gegenüber dem Befestigungselement 58b ausgebildet.

Das Befestigungselement 58b weist eine Ausnehmung 60b auf. Die Ausnehmung 60b ist zumindest im Wesentlichen rechteckig ausgebildet. Die Ausnehmung 60b ist als ein Ausschnitt ausgebildet, der von einer Unterkante 62b des Befestigungselements 58b ausgeht. Ein nicht näher dargestelltes Befestigungsmittel der Kopfstütze 18b ist in der Ausnehmung 60b angeordnet. Das Befestigungsmittel der Kopfstütze 18b befestigt die Kopfstütze 18b an der Rückenlehne 14b.

Das Befestigungselement 58b weist mehrere Schlitze 64b auf. Im vorliegenden Fall weist das Befestigungselement 58b drei Schlitze 64b auf. Die Schlitze 64b sind oberhalb des Befestigungsmittels der Kopfstütze 18b angeordnet. Die Schlitze 64b sind oberhalb der Ausnehmung 60b angeordnet. Die Schlitze 64b sind jeweils als ein Durchgangsloch ausgebildet. Die Schlitze 64b sind jeweils als ein Langloch ausgebildet. Die Infektionsschutztrenneinheit 32b umfasst zwei Halteelemente 66b. Die Halteelemente 66b sind jeweils als ein Band ausgebildet. Die Halteelemente 66b sind dazu vorgesehen, das Befestigungselement 58b an die Kopfstütze 18b anzubinden. Die Halteelemente 66b umgeben die Kopfstütze 18b ringförmig. Die Halteelemente 66b sind jeweils durch einen der Schlitze 64b geführt. Dadurch kann das Befestigungselement 58b kraftschlüssig und/oder formschlüssig mit der Kopfstütze 18b verbunden werden. Im vorliegenden Fall sind die Halteelemente 66b jeweils als ein elastisches Gummiband ausgebildet. Im vorliegenden Fall sind die zwei Halteelemente 66b durch äußere der drei Schlitze 64b geführt, wobei ein mittlerer der drei Schlitze 64b ungenutzt ist. Alternativ wäre es denkbar, dass die Infektionsschutztrenneinheit 32b lediglich ein Halteelement 66b aufweist, das durch den mittleren der drei Schlitze 64b geführt ist, wobei die äußeren der Schlitze 64b ungenutzt sind. Dadurch kann vorteilhaft eine einzige Infektionsschutztrenneinheit 32b für verschieden ausgestaltete Kopfstützen und/oder Kopfstützanbindungen an die Rückenlehne 14b bereitgestellt werden. Im vorliegenden Fall sind die Halteelemente 66b durch das Bezugselement 22b der Kopfstütze 18b verdeckt. Alternativ wäre es jedoch auch denkbar, dass die Halteelemente 66b auf einer dem Passagier zugewandten Außenseite des Bezugselements 22b angeordnet sind. Grundsätzlich wäre es auch denkbar, dass das Bezugselement 22b der Kopfstütze 18b durch die Schlitze 64b geführt ist, wobei das Befestigungselement 58b mittels des Bezugselements 22b der Kopfstütze 18b mit der Kopfstütze 18b verbunden ist. In diesem Fall könnte auf die Halteelemente 66b zu einer Anbindung des Befestigungselements 58b an die Kopfstütze 18b verzichtet werden. Alternativ wäre es denkbar, dass die Infektionsschutztrenneinheit 32b zumindest ein Halteelement aufweist, das als ein Flausch- und Hakenband ausgebildet ist, wobei das zumindest eine Halteelement zwischen der Ausnehmung 60b und einer Oberkante 68b des Befestigungselements 58b, insbesondere zwischen den Schlitzen 64b und der Oberkante 68b des Befestigungselements 58b, angeordnet und dazu vorgesehen ist, mit der Kopfstütze 18b gekoppelt zu werden.

Alternativ oder zusätzlich wäre es denkbar, dass die Halteelemente 66b mittels Druckknöpfen mit dem Befestigungselement 58b verbunden sind. Die Druckknöpfe können dabei an der Oberkante 68b des Befestigungselements 58b und/oder an der Unterkante 62b des Befestigungselements 58b angeordnet sein.

Grundsätzlich wäre es auch denkbar, dass die Halteelemente 66b jeweils als ein Kabelbinder ausgebildet sind, wobei die Halteelemente 66b das Befestigungselement 58b mit der Kopfstütze 18b, insbesondere mit dem Befestigungsmittel der Kopfstütze 18b, verbinden.

Alternativ wäre es auch denkbar, dass die Infektionsschutztrenneinheit 32b zumindest ein Flausch- und Hakenband umfasst, das das Befestigungselement 58b direkt mit der Kopfstütze 18b, insbesondere mit dem Bezugselement 22b der Kopfstütze 18b, verbindet. Ein Teil des Flausch- und Hakenbands ist dabei auf einer der Rückenlehne 14b zugewandten Seite der Kopfstütze 18b angeordnet. Ein zu dem Teil korrespondierender weiterer Teil des Flausch- und Hakenbands ist auf einer der Kopfstütze 18b zugewandten Seite des Befestigungselements 58b angeordnet.

Die Infektionsschutztrenneinheit 32b weist ein Versteifungselement 70b auf. Das Versteifungselement 70b ist dazu vorgesehen, das Trennelement 36b gegenüber dem Befestigungselement 58b zu versteifen. Des Weiteren ist das Versteifungselement 70b dazu vorgesehen, eine Verwindung des Befestigungselements 58b zu vermeiden. Das Versteifungselement 70b ist plattenförmig ausgebildet. Eine Haupterstreckungsebene des Versteifungselements 70b ist zumindest im Wesentlichen parallel zu der Aufständerebene ausgerichtet. Die Haupterstreckungsebene des Versteifungselements 70b ist zumindest im Wesentlichen orthogonal zu der Haupterstreckungsebene des Trennelements 36b und zu der Haupterstreckungsebene des Befestigungselements 58b ausgerichtet. Das Versteifungselement 70b ist einstückig mit dem Trennelement 36b ausgebildet. Das Versteifungselement 70b bildet an der Oberkante 56b des Trennelements 36b einen in den Flugzeugsitzbereich 24b des Flugzeugsitzes 12b hineinragenden Fortsatz des Trennelements 36b aus. Das Versteifungselement 70b ist einstückig mit dem Befestigungselement 58b ausgebildet. Das Versteifungselement 70b bildet an der Oberkante 68b des Befestigungselements 58b einen in den Flugzeugsitzbereich 24b des Flugzeugsitzes 12b hineinragenden Fortsatz des Befestigungselements 58b aus. Grundsätzlich ist es denkbar, dass das Versteifungselement 70b auf der Kopfstütze 18b aufliegt. Alternativ wäre es denkbar, dass die Infektionsschutztrenneinheit 32b mehrere Versteifungssicken aufweist, die durch das Trennelement 36b ausgebildet sind. Die Versteifungssicken erstrecken sich dabei in der Sitzrichtung 26b. Zusätzlich oder alternativ wäre es denkbar, dass die Infektionsschutztrenneinheit 32b an dem hinteren Ende 38b mehrere Versteifungselemente aufweist, die das Trennelement 36b gegenüber dem Befestigungselement 58b versteifen.

Die Infektionsschutztrenneinheit 32b umfasst im vorliegenden Fall einen optionalen Kantenschutz 72b. Der Kantenschutz 72b ist dazu vorgesehen, den Passagier vor einer Verletzung durch eine, insbesondere scharfe, freie Kante des dünnwandigen Trennelements 36b zu schützen. Der Kantenschutz 72b kann beispielsweise aus einem Gummi und/oder aus einem Schaumstoff gebildet sein. Der Kantenschutz 72b umgibt zumindest eine freie Kante des Trennelements 36b. Der Kantenschutz 72b umgibt zumindest eine freie Kante des Befestigungselements 58b. Der Kantenschutz 72b umgibt zumindest eine freie Kante des Versteifungselements 70b.

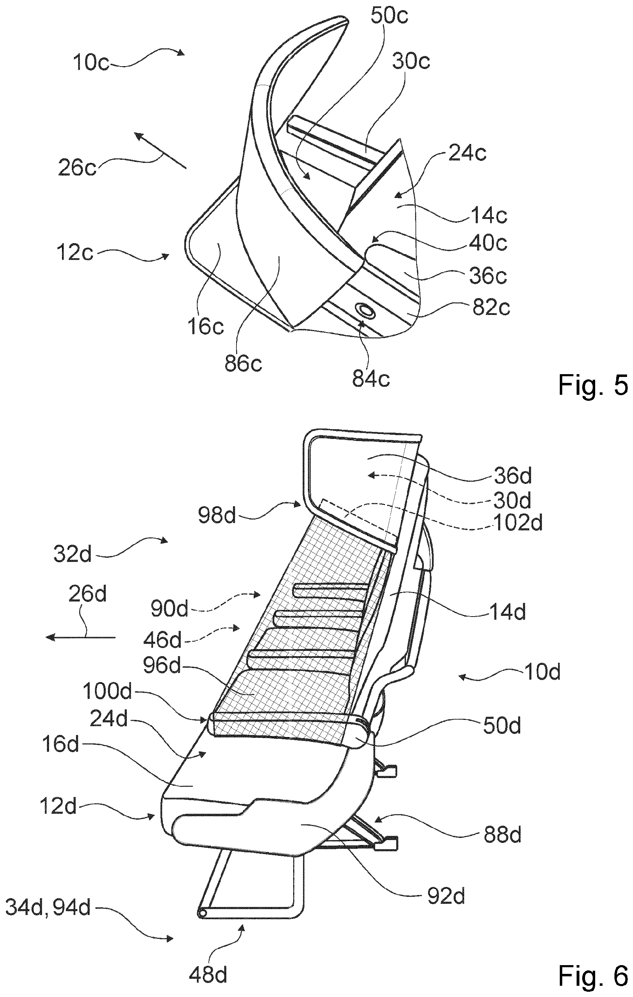

In den Figuren 4 und 5 ist eine Flugzeugsitzvorrichtung 10c in einem dritten, nicht erfindungsgemäßen Ausführungsbeispiel gezeigt. Die Flugzeugsitzvorrichtung 10c weist eine nicht näher dargestellte Aufständereinheit auf. Die Flugzeugsitzvorrichtung 10c umfasst einen Flugzeugsitz 12c. Der Flugzeugsitz 12c weist eine Rückenlehne 14c auf. Der Flugzeugsitz 12c weist eine Sitzbodeneinheit 16c auf. Der Flugzeugsitz 12c weist eine Sitzrichtung 26c auf. Der Flugzeugsitz 12c kann grundsätzlich eine Kopfstütze aufweisen. Im vorliegenden Fall weist der Flugzeugsitz 12c keine Kopfstütze auf. Der Flugzeugsitz 12c bildet einen Flugzeugsitzbereich 24c aus. Der Flugzeugsitz 12c bildet einen Kopfbereich 30c aus. Die Flugzeugsitzvorrichtung 10c weist zumindest eine Armlehne 50c auf.

Die Flugzeugsitzvorrichtung 10c weist eine Infektionsschutztrenneinheit 32c auf. Die Infektionsschutztrenneinheit 32c ist dazu vorgesehen, den Flugzeugsitzbereich 24c in dem Kopfbereich 30c von einer Umgebung 34c des Flugzeugsitzbereichs 24c abzutrennen. Die Infektionsschutztrenneinheit 32c ist an der Rückenlehne 14c des Flugzeugsitzes 12c angeordnet. Die Infektionsschutztrenneinheit 32c ist mit der Rückenlehne 14c des Flugzeugsitzes 12c gekoppelt. Die Infektionsschutztrenneinheit 32c weist ein Trennelement 36c auf. Das Trennelement 36c ist von der Rückenlehne 14c abnehmbar ausgebildet. Das Trennelement 36c ist dazu vorgesehen, den Flugzeugsitzbereich 24c in dem Kopfbereich 30c von der Umgebung 34c des Flugzeugsitzbereichs 24c abzutrennen.

Im Unterschied zu dem ersten und dem zweiten Ausführungsbeispiel ist die Infektionsschutztrenneinheit 32c aus dem dritten Ausführungsbeispiel direkt mit der Rückenlehne 14c verbunden.

Das Trennelement 36c ist L-förmig ausgebildet. Das Trennelement 36c ist teilweise seitlich neben der Rückenlehne 14c angeordnet. Das Trennelement 36c ist teilweise oberhalb der Rückenlehne 14c angeordnet. Eine Haupterstreckungsebene der Rückenlehne 14c schneidet das Trennelement 36c. Das Trennelement 36c erstreckt sich zumindest teilweise über eine Oberkante der Rückenlehne 14c hinaus. Das Trennelement 36c ist im vorliegenden Fall starr ausgebildet. Das Trennelement 36c weist ein freies Ende 40c auf. Das freie Ende 40c ist von der Rückenlehne 14c in der Sitzrichtung 26c beabstandet. Eine maximale Erstreckung des Trennelements 36c in einer Richtung quer zu der Sitzrichtung 26c und parallel zu der Aufständerebene ist größer als eine maximale Erstreckung der Rückenlehne 14c in einer Richtung quer zu der Sitzrichtung 26c und parallel zu der Aufständerebene. Das Trennelement 36c weist ein Bezugselement 42c auf. Das Bezugselement 42c ist im vorliegenden Fall aus einem Kunstleder gebildet. Grundsätzlich ist es denkbar, dass das Trennelement 36c und/oder das Bezugselement 42c gepolstert ausgebildet sind. Im vorliegenden Fall weist der Flugzeugsitz 12c ein Antimakassar 168c auf. Das Antimakassar 168c ist im vorliegenden Fall an dem Trennelement 36c angeordnet. Das Antimakassar 168c ist mittels eines Flausch- und Hakenbands mit dem Bezugselement 42c verbunden.

Der Flugzeugsitz 12c weist eine Literaturtasche 74c auf. Die Literaturtasche 74c ist an einer Rückseite der Rückenlehne 14c angeordnet. Die Literaturtasche 74c ist in einem oberen Bereich der Rückenlehne 14c in die Rückenlehne 14c integriert. Der Flugzeugsitz 12c weist eine Tischeinheit 76c auf, die an der Rückseite der Rückenlehne 14c angeordnet ist. Die Tischeinheit 76c weist einen Tisch 78c auf. Der Tisch 78c grenzt in einem eingeklappten Zustand unmittelbar an die Literaturtasche 74c an. Die Literaturtasche 74c weist zumindest einen Materialdurchbruch in Richtung des Tisches 78c auf. Eine Ebene parallel zu der Aufständerebene schneidet den Kopfbereich 30c und die Literaturtasche 74c. Eine Ebene parallel zu der Aufständerebene schneidet den Tisch 78c der Tischeinheit 76c und die Literaturtasche 74c.

Die Infektionsschutztrenneinheit 32c weist ein Befestigungselement 80c auf. Das Befestigungselement 80c ist dazu vorgesehen, das Trennelement 36c an die Rückenlehne 14c anzubinden. Das Befestigungselement 80c ist einstückig mit dem Trennelement 36c ausgebildet. Das Bezugselement 42c überspannt das Trennelement 36c und das Befestigungselement 80c. Das Befestigungselement 80c erstreckt sich um mindestens 10 cm von einer Unterkante 54c des Trennelements 36c in Richtung der Aufständerebene. Das Befestigungselement 80c ist zumindest teilweise in der Literaturtasche 74c angeordnet. Das Befestigungselement 80c ist dazu vorgesehen, in einer Richtung zumindest im Wesentlichen orthogonal zu der Aufständerebene in die Literaturtasche 74c eingeschoben zu werden. Das Befestigungselement 80c ordnet das Trennelement 36c zumindest in einer Richtung, insbesondere der Sitzrichtung 26c, in einer Ebene parallel zu der Aufständerebene zumindest formschlüssig in der Literaturtasche 74c an. Dadurch kann eine vorteilhaft einfache Anordnung der Infektionsschutztrenneinheit 32c an der Rückenlehne 14c erfolgen. Grundsätzlich wäre es denkbar, dass das Befestigungselement 80c zumindest ein Rastelement aufweist, mittels dem das Befestigungselement 80c in der Literaturtasche 74c und/oder an einem an die Literaturtasche 74c angrenzenden Bauteil der Rückenlehne 14c formschlüssig verrastbar ist. Beispielsweise wäre es denkbar, dass das zumindest eine Rastelement in den zumindest einen Materialdurchbruch der Literaturtasche 74c eingreift, um das Befestigungselement 80c in der Literaturtasche 74c zu verrasten. Dadurch kann ein Herausbewegen des Befestigungselements 80c aus der Literaturtasche 74c vorteilhaft verhindert werden.

Die Infektionsschutztrenneinheit 32c weist ein weiteres Befestigungselement 170c auf. Das weitere Befestigungselement 170c ist als ein Flausch- und Hakenband ausgebildet. Das weitere Befestigungselement 170c ist an einer auf der Rückenlehne 14c aufliegenden, der Aufständerebene zugewandten Fläche des Trennelements 36c angeordnet. Das weitere Befestigungselement 170c ist mit einem Flausch- und Hakenband, welches an der Oberkante der Rückenlehne 14c angeordnet ist, gekoppelt. Dadurch kann das Trennelement 36c besonders vorteilhaft mit der Rückenlehne 14c verbunden werden. Das Antimakassar 168c des Flugzeugsitzes 12c ist ohne Montage der Infektionsschutztrenneinheit 32c dazu vorgesehen, mit dem an der Oberkante der Rückenlehne 14c angeordneten Flausch- und Hakenband gekoppelt zu werden. Dadurch kann eine besonders vorteilhafte Mehrfachverwendung für das an der Oberkante der Rückenlehne 14c angeordnete Flausch- und Hakenband erreicht werden.

Die Infektionsschutztrenneinheit 32c weist ein weiteres Trennelement 82c auf. Das weitere Trennelement 82c ist an dem freien Ende 40c des Trennelements 36c angeordnet. Das weitere Trennelement 82c ist beweglich an dem Trennelement 36c angeordnet. Das weitere Trennelement 82c ist schwenkbar an dem Trennelement 36c angebracht. Eine Schwenkachse 104c, um die das weitere Trennelement 82c schwenkbar gelagert ist, ist quer zu der Sitzrichtung 26c ausgerichtet. Die Schwenkachse 104c, um die das weitere Trennelement 82c schwenkbar gelagert ist, ist zumindest im Wesentlichen parallel zu der Aufständerebene ausgerichtet. Die Schwenkachse 104c ist von der Rückenlehne 14c in der Sitzrichtung 26c beabstandet. Die Infektionsschutztrenneinheit 32c weist eine Lagereinheit 84c auf, die dazu vorgesehen ist, das weitere Trennelement 82c schwenkbar an dem Trennelement 36c zu lagern. Die Lagereinheit 84c ist dazu vorgesehen, das weitere Trennelement 82c in definierten Stellungen zu halten. Das weitere Trennelement 82c ist reversibel biegbar ausgebildet. Das weitere Trennelement 82c ist dazu vorgesehen, zumindest teilweise in den Flugzeugsitzbereich 24c hinein gebogen zu werden. Grundsätzlich wäre es auch denkbar, dass das weitere Trennelement 82c dazu vorgesehen ist, zumindest teilweise aus dem Flugzeugsitzbereich 24c hinaus gebogen zu werden. Das weitere Trennelement 82c ist nach einer Biegeverformung formstabil ausgebildet.

Das weitere Trennelement 82c weist ein weiteres Bezugselement 86c auf (Fig. 5), welches das weitere Trennelement 82c zumindest im Wesentlichen überspannt. Das weitere Bezugselement 86c ist im vorliegenden Fall aus einem Kunstleder gebildet und weist einen Schaumstoffkern auf.

In der Figur 6 ist eine Flugzeugsitzvorrichtung 10d in einem vierten, nicht erfindungsgemäßen Ausführungsbeispiel gezeigt. Die Flugzeugsitzvorrichtung 10d weist eine Aufständereinheit 88d auf. Die Flugzeugsitzvorrichtung 10d umfasst einen Flugzeugsitz 12d. Der Flugzeugsitz 12d weist eine Rückenlehne 14d auf. Der Flugzeugsitz 12d weist eine Sitzbodeneinheit 16d auf. Der Flugzeugsitz 12d weist eine Sitzrichtung 26d auf. Der Flugzeugsitz 12b kann grundsätzlich eine Kopfstütze aufweisen. Der Flugzeugsitz 12d bildet einen Flugzeugsitzbereich 24d aus. Der Flugzeugsitz 12d bildet einen Kopfbereich 30d aus. Die Flugzeugsitzvorrichtung 10d umfasst zwei weitere Flugzeugsitze 46d, 90d. Die weiteren Flugzeugsitze 46d, 90d sind zumindest im Wesentlichen identisch zu dem Flugzeugsitz 12d ausgebildet. Der Flugzeugsitz 12d und die weiteren Flugzeugsitze 46d, 90d bilden eine Sitzbank 48d aus. Der Flugzeugsitz 12d und der weitere Flugzeugsitz 46d sind unmittelbar nebeneinander angeordnet. Der Flugzeugsitz 12d und die weiteren Flugzeugsitze 46d, 90d sind gemeinsam über die Aufständereinheit 88d auf der Aufständerebene aufgeständert. Die Flugzeugsitzvorrichtung 10d weist zumindest einen Sitzteiler 92d auf. Der Sitzteiler 92d ist unmittelbar neben dem Flugzeugsitz 12d und an einer Außenseite der Sitzbank 48d angeordnet. Grundsätzlich kann der Sitzteiler 92d auch unmittelbar zwischen dem Flugzeugsitz 12d und dem weiteren Flugzeugsitz 46d angeordnet sein. Die Flugzeugsitzvorrichtung 10d weist zumindest eine Armlehne 50d auf, die an dem zumindest einen Sitzteiler 92d angeordnet ist. Die Armlehne 50d ist schwenkbar ausgebildet.

Die Flugzeugsitzvorrichtung 10d weist eine Infektionsschutztrenneinheit 32d auf. Die Infektionsschutztrenneinheit 32d ist dazu vorgesehen, den Flugzeugsitzbereich 24d zumindest in dem Kopfbereich 30d von einer Umgebung 34d des Flugzeugsitzbereichs 24d, insbesondere von einem Flugzeugkabinengangbereich 94d, abzutrennen. Im vorliegenden Fall ist die Umgebung 34d als der Flugzeugkabinengangbereich 94d ausgebildet. Die Infektionsschutztrenneinheit 32d ist an der Rückenlehne 14d des Flugzeugsitzes 12d angeordnet. Die Infektionsschutztrenneinheit 32d kann grundsätzlich auch an der Kopfstütze des Flugzeugsitzes 12d angeordnet sein. Die Infektionsschutztrenneinheit 32d kann grundsätzlich wie in den vorhergehenden Ausführungsbeispielen an die Rückenlehne 14d und/oder die Kopfstütze angebunden sein. Die Infektionsschutztrenneinheit 32d weist ein Trennelement 36d auf. Das Trennelement 36d kann grundsätzlich identisch mit den Trennelementen 36a, 36b, 36c aus den vorhergehenden Ausführungsbeispielen ausgebildet sein. Im vorliegenden Fall weist das Trennelement 36d eine trapezförmige Grundform auf. Das Trennelement 36d ist zumindest im Wesentlichen zwischen dem Flugzeugsitz 12d und einem Flugzeugkabinengang angeordnet. Alternativ kann das Trennelement 36d auch zumindest im Wesentlichen zwischen dem Flugzeugsitz 12d und dem weiteren Flugzeugsitz 46d angeordnet sein.

Gegenüber den vorhergehenden Ausführungsbeispielen unterscheidet sich die Infektionsschutztrenneinheit 32d in dem vierten Ausführungsbeispiel insbesondere durch eine vergrößerbare Abtrennung des Flugzeugsitzbereichs 24d.

Die Infektionsschutztrenneinheit 32d weist ein weiteres Trennelement 96d auf. Das weitere Trennelement 96d ist transparent ausgebildet. Alternativ kann das weitere Trennelement 96d auch opak ausgebildet sein. Das weitere Trennelement 96d ist mit dem Trennelement 36d verbunden. Das weitere Trennelement 96d ist an einer Unterseite 98d des Trennelements 36d angeordnet. Das weitere Trennelement 96d ist zumindest teilweise in das Trennelement 36d integriert. Das weitere Trennelement 96d ist ausziehbar in Richtung der Armlehne 50d ausgebildet. Das weitere Trennelement 96d ist trapezförmig ausgebildet. Das weitere Trennelement 96d ist im vorliegenden Fall als ein Rolloelement und/oder als ein Plisseeelement ausgebildet. Das weitere Trennelement 96d ist dazu vorgesehen, bis zu der Armlehne 50d geführt zu werden. Das weitere Trennelement 96d ist dazu vorgesehen, mit der Armlehne 50d gekoppelt zu werden. Das weitere Trennelement 96d ist im vorliegenden Fall mit dem Trennelement 36d und mit der Armlehne 50d verbunden. Das weitere Trennelement 96d weist einen Armlehnenbefestigungsbereich 100d auf, in dem das weitere Trennelement 96d die Armlehne 50d ringförmig umgibt. Die Infektionsschutztrenneinheit 32d weist im vorliegenden Fall eine Verstaueinheit 102d auf. Die Verstaueinheit 102d ist an dem Trennelement 36d oder in dem Trennelement 36d angeordnet. Die Verstaueinheit 102d ist an der Unterseite 98d des Trennelements 36d angeordnet. Die Verstaueinheit 102d ist dazu vorgesehen, das weitere Trennelement 96d zu verstauen. Grundsätzlich wäre es denkbar, dass die Verstaueinheit 102d eine Aufrolleinheit ausbildet, die dazu vorgesehen ist, das Rolloelement aufzurollen und/oder abzurollen, oder dass die Verstaueinheit 102d einen Verstauraum ausbildet, der dazu vorgesehen ist, das Plisseeelement in einem zusammengefalteten Zustand aufzunehmen. Grundsätzlich wäre es dabei denkbar, dass die Infektionsschutztrenneinheit 32d ein nicht näher dargestelltes Desinfektionsmodul aufweist, das dazu vorgesehen ist, das weitere Trennelement 96d und/oder das Trennelement 36d selbststätig, insbesondere in einem verstauten Zustand des weiteren Trennelements 96d, zu desinfizieren. Das Desinfektionsmodul kann zumindest teilweise in der Verstaueinheit 102d angeordnet sein. Hierbei wäre es denkbar, dass das Desinfektionsmodul ein Desinfektionsmittel bei einem Aufrollen und/oder bei einem Abrollen des weiteren Trennelements 96d aufbringt und/oder dass das Desinfektionsmodul das weitere Trennelement 96d bei dem Aufrollen und/oder bei dem Abrollen des weiteren Trennelements 96d mit UV-Licht bestrahlt. Grundsätzlich wäre es dabei denkbar, dass durch das Aufrollen und/oder Abrollen des weiteren Trennelements 96d, insbesondere mittels eines elektrischen Generators des Desinfektionsmoduls, erzeugte elektrische Energie zu einer Bestrahlung des weiteren Trennelements 96d mit UV-Licht mittels einer UV-Lichtquelle des Desinfektionsmoduls vorgesehen ist.

Alternativ wäre es denkbar, dass das weitere Trennelement 96d als eine Folie oder als ein Textil ausgebildet ist. Dabei ist das weitere Trennelement 96d zwischen dem Trennelement 36d und der Armlehne 50d gespannt. Dabei wäre es denkbar dass das weitere Trennelement 96d mittels Druckknöpfen und/oder mittels Flausch- und Hakenbändern mit dem Trennelement 36d und/oder mit der Armlehne 50d verbunden ist.

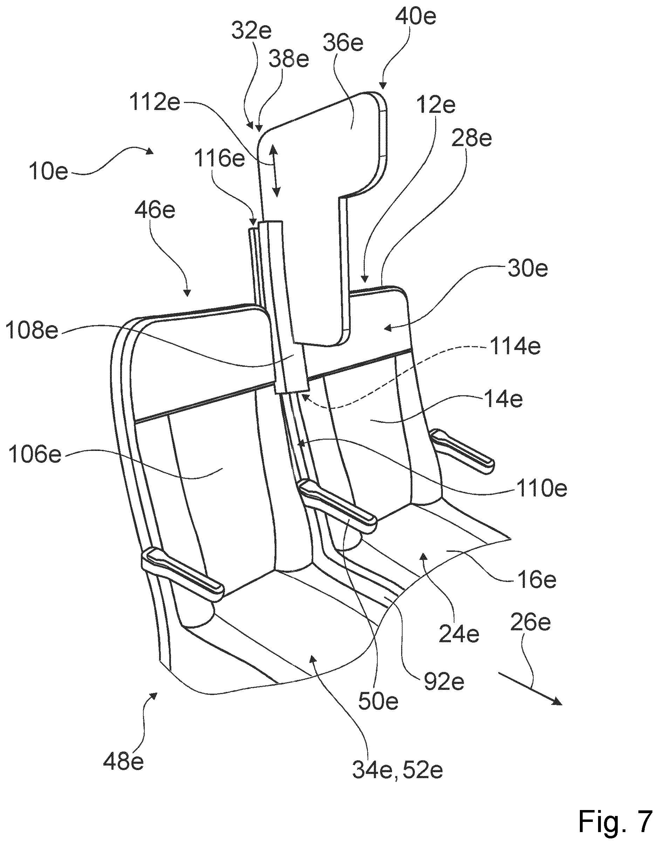

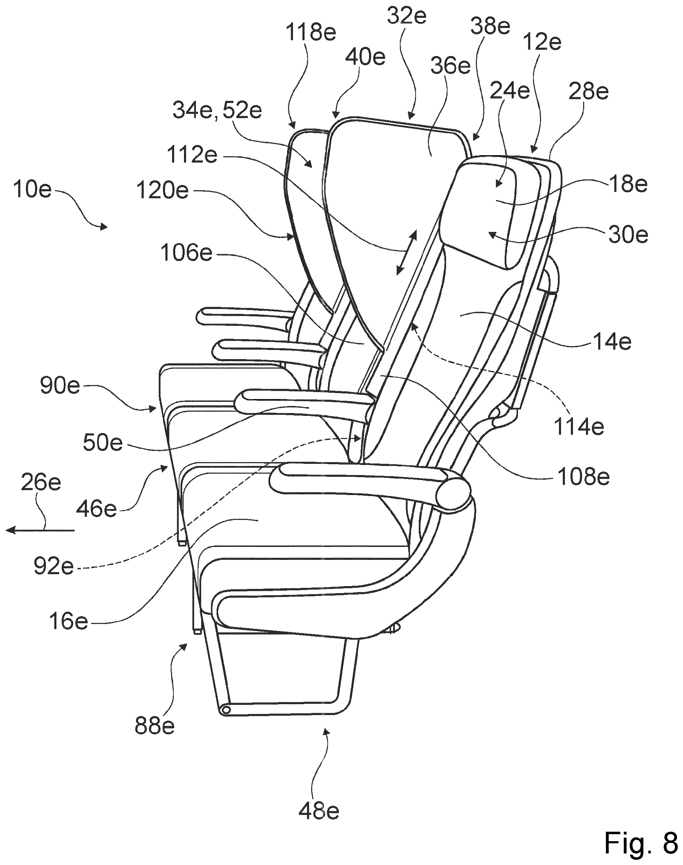

In den Figuren 7 und 8 ist eine Flugzeugsitzvorrichtung 10e in einem fünften, nicht erfindungsgemäßen Ausführungsbeispiel gezeigt. Die Figuren 7 und 8 zeigen dabei zwei Variationen der Flugzeugsitzvorrichtung 10e, wobei die nachfolgenden Merkmale, wenn nicht explizit anders angegeben, für beide Figuren gültig sind. Die Flugzeugsitzvorrichtung 10e weist eine Aufständereinheit 88e auf. Die Flugzeugsitzvorrichtung 10e umfasst einen Flugzeugsitz 12e. Der Flugzeugsitz 12e weist eine Rückenlehne 14e auf. Die Rückenlehne 14e des Flugzeugsitzes 12e ist unverstellbar ausgebildet. Eine Neigung der Rückenlehne 14e des Flugzeugsitzes 12e ist fest vorgegeben und nicht durch einen Passagier anpassbar. Die Rückenlehne 14e weist eine Haupterstreckungsebene auf. Der Flugzeugsitz 12e weist eine Sitzbodeneinheit 16e auf. Der Flugzeugsitz 12e weist eine Sitzrichtung 26e auf. Der Flugzeugsitz 12e kann grundsätzlich eine Kopfstütze 18e aufweisen (Fig. 8). Der Flugzeugsitz 12e bildet einen Flugzeugsitzbereich 24e aus. Der Flugzeugsitz 12e bildet einen Kopfbereich 30e aus. Die Flugzeugsitzvorrichtung 10e umfasst zumindest einen weiteren Flugzeugsitz 46e. Der zumindest eine weitere Flugzeugsitz 46e ist zumindest im Wesentlichen identisch zu dem Flugzeugsitz 12e ausgebildet. Der Flugzeugsitz 12e und der zumindest eine weitere Flugzeugsitz 46e bilden eine Sitzbank 48e aus. Der weitere Flugzeugsitz 46e ist gemeinsam mit dem Flugzeugsitz 12e in einer Sitzreihe angeordnet. Der Flugzeugsitz 12e und der weitere Flugzeugsitz 46e sind unmittelbar nebeneinander angeordnet. Der Flugzeugsitz 12e und der zumindest eine weitere Flugzeugsitz 46e sind gemeinsam über die Aufständereinheit 88e auf der Aufständerebene aufgeständert. Die Flugzeugsitzvorrichtung 10e weist zumindest einen Sitzteiler 92e auf. Der Sitzteiler 92e ist unmittelbar zwischen dem Flugzeugsitz 12e und dem weiteren Flugzeugsitz 46e angeordnet. Der Flugzeugsitz 12e und der weitere Flugzeugsitz 46e sind lediglich durch den Sitzteiler 92e voneinander beabstandet. Die Flugzeugsitzvorrichtung 10e weist zumindest eine Armlehne 50e auf, die an dem Sitzteiler 92e angeordnet ist. Die Armlehne 50e ist zwischen dem Flugzeugsitz 12e und dem weiteren Flugzeugsitz 46e angeordnet. Die Armlehne 50e ist schwenkbar ausgebildet.

Die Flugzeugsitzvorrichtung 10e weist eine Infektionsschutztrenneinheit 32e auf. Im Unterschied zu den vorhergehenden Ausführungsbeispielen ist die Infektionsschutztrenneinheit 32e alternativ an die Rückenlehne 14e angebunden. Die Infektionsschutztrenneinheit 32e ist mit der Rückenlehne 14e des Flugzeugsitzes 12e und mit einer weiteren Rückenlehne 106e des weiteren Flugzeugsitzes 46e gekoppelt. Die weitere Rückenlehne 106e des weiteren Flugzeugsitzes 46e ist unverstellbar ausgebildet. Eine Neigung der weiteren Rückenlehne 106e des weiteren Flugzeugsitzes 46e ist fest vorgegeben und nicht durch einen Passagier anpassbar. Die Infektionsschutztrenneinheit 32e ist an der Rückenlehne 14e des Flugzeugsitzes 12e und an der weiteren Rückenlehne 106e des weiteren Flugzeugsitzes 46e angeordnet. Die Infektionsschutztrenneinheit 32e ist dazu vorgesehen, zwischen die Rückenlehne 14e des Flugzeugsitzes 12e und die weitere Rückenlehne 106e des weiteren Flugzeugsitzes 46e eingeschoben zu werden. Die Infektionsschutztrenneinheit 32e ist lediglich vollständig montierbar, wenn die Armlehne 50e in einer Gebrauchsstellung angeordnet ist. Die Infektionsschutztrenneinheit 32e ist dazu vorgesehen, den Flugzeugsitzbereich 24e zumindest in dem Kopfbereich 30e von einer Umgebung 34e des Flugzeugsitzbereichs 24e, insbesondere von einem weiteren Flugzeugsitzbereich 52e des weiteren Flugzeugsitzes 46e, abzutrennen. Die Infektionsschutztrenneinheit 32e ist zumindest teilweise zwischen der Rückenlehne 14e des Flugzeugsitzes 12e und der weiteren Rückenlehne 106e des weiteren Flugzeugsitzes 46e angeordnet. Die Infektionsschutztrenneinheit 32e ist werkzeuglos zwischen der Rückenlehne 14e und der weiteren Rückenlehne 106e montierbar und demontierbar.

Die Infektionsschutztrenneinheit 32e weist ein Befestigungselement 108e auf. Im vorliegenden Fall ist das Befestigungselement 108e aus einem Schaumstoff gebildet. Alternativ wäre es auch denkbar, dass das Befestigungselement 108e aus einer Kombination eines Kunststoffes und eines Schaumstoffes gebildet ist. Das Befestigungselement 108e ist zur Befestigung der Infektionsschutztrenneinheit 32e dazu vorgesehen, zwischen der Rückenlehne 14e des Flugzeugsitzes 12e und der weiteren Rückenlehne 106e des weiteren Flugzeugsitzes 46e angeordnet zu werden. Das Befestigungselement 108e ist dazu vorgesehen, zwischen die Rückenlehne 14e des Flugzeugsitzes 12e und die weitere Rückenlehne 106e des weiteren Flugzeugsitzes 46e geschoben zu werden. Das Befestigungselement 108e ist dazu vorgesehen, einen Freiraum 110e zwischen der Rückenlehne 14e und der weiteren Rückenlehne 106e zumindest zu einem Großteil auszufüllen. Der Freiraum 110e erstreckt sich im vorliegenden Fall von einer Oberkante des Sitzteilers 92e bis zu einer Oberkante 28e der Rückenlehne 14e. Das Befestigungselement 108e ist dazu vorgesehen, den Freiraum 110e zwischen der Rückenlehne 14e und der weiteren Rückenlehne 106e oberhalb der Armlehne 50e bis zu der Oberkante 28e der Rückenlehne 14e zumindest zu einem Großteil auszufüllen. Die Haupterstreckungsebene der Rückenlehne 14e schneidet das Befestigungselement 108e. Das Befestigungselement 108e ist zu einer Montage und/oder Demontage der Infektionsschutztrenneinheit 32e in einer Richtung 112e zumindest im Wesentlichen parallel zu der Haupterstreckungsebene der Rückenlehne 14e verschiebbar. Grundsätzlich wäre es denkbar, dass die Rückenlehne 14e des Flugzeugsitzes 12e verstellbar ausgebildet ist, wobei die Neigung der Rückenlehne 14e durch einen Passagier anpassbar ist. In diesem Fall könnte das Befestigungselement 108e alternativ montiert und/oder demontiert werden, insbesondere durch ein Einklippen, und/oder durch ein Einschwenken des Befestigungselements 108e zwischen die Rückenlehne 14e und die weitere Rückenlehne 106e, wenn beispielsweise die Rückenlehne 14e zu der Rückenlehne 106e verschwenkt ist. Dadurch könnte eine vorteilhaft einfache Montage der Infektionsschutztrenneinheit 32e auch dann erfolgen, wenn ein Raum oberhalb der Oberkante 28e der Rückenlehne 14e begrenzt ist.

Das Befestigungselement 108e ist in zumindest einer Richtung, insbesondere der Sitzrichtung 26e, in einer Ebene parallel zu der Aufständerebene formschlüssig zwischen der Rückenlehne 14e und der weiteren Rückenlehne 106e gelagert. Das Befestigungselement 108e weist, insbesondere in einer Ebene zumindest im Wesentlichen parallel zu der Aufständerebene, einen H-förmigen Querschnitt auf. Der Querschnitt ist über eine gesamte Länge des Befestigungselements 108e zumindest im Wesentlichen konstant. Das Befestigungselement 108e weist eine Nut 114e auf. Die Nut 114e ist dazu vorgesehen, die Rückenlehne 14e des Flugzeugsitzes 12e teilweise aufzunehmen. Die Rückenlehne 14e erstreckt sich in einem seitlichen Bereich der Rückenlehne 14e, welcher der weiteren Rückenlehne 106e zugewandt ist, in die Nut 114e hinein. Die Nut 114e erstreckt sich über eine gesamte Länge des Befestigungselements 108e. Die Rückenlehne 14e bildet einen Anbindungsbereich aus. Der Anbindungsbereich ist in dem seitlichen Bereich der Rückenlehne 14e angeordnet. Die Nut 114e umgreift den Anbindungsbereich. Das Befestigungselement 108e weist eine weitere Nut 116e auf. Die weitere Nut 116e ist dazu vorgesehen, die weitere Rückenlehne 106e des weiteren Flugzeugsitzes 46e teilweise aufzunehmen. Die weitere Rückenlehne 106e erstreckt sich in einem seitlichen Bereich der weiteren Rückenlehne 106e, welcher der Rückenlehne 14e zugewandt ist, in die weitere Nut 116e hinein. Die weitere Nut 116e erstreckt sich über die gesamte Länge des Befestigungselements 108e. Die weitere Rückenlehne 106e bildet einen weiteren Anbindungsbereich aus. Der weitere Anbindungsbereich ist in dem seitlichen Bereich der weiteren Rückenlehne 106e angeordnet. Die weitere Nut 116e umgreift den weiteren Anbindungsbereich. Die Nut 114e und die weitere Nut 116e sind gleichförmig ausgebildet. Im vorliegenden Fall sind die Nut 114e und die weitere Nut 116e jeweils rechteckig ausgebildet. Alternativ können die Nut 114e und die weitere Nut 116e jeweils U-förmig, V-förmig oder Ω-förmig ausgebildet sein. Grundsätzlich wäre es auch denkbar, dass die Nut 114e, insbesondere zu einer Anpassung an eine Form der Rückenlehne 14e, asymmetrisch ausgebildet ist. Die Nut 114e und die weitere Nut 116e sind jeweils auf einer voneinander abgewandten Seite des Befestigungselements 108e angeordnet. Die Nut 114e und die weitere Nut 116e sind zumindest im Wesentlichen parallel zu der Haupterstreckungsebene der Rückenlehne 14e ausgerichtet. Grundsätzlich wäre es auch denkbar, dass die Nut 114e und die weitere Nut 116e entlang der gesamten Länge des Befestigungselements 108e jeweils gekrümmt ausgebildet sind. Dadurch kann die Nut 114e vorteilhaft an eine Form der Rückenlehne 14e angepasst werden. Die Nut 114e und die weitere Nut 116e dienen jeweils als eine Führungsbahn für einen Einschub der Infektionsschutztrenneinheit 32e in der Richtung 112e zwischen die Rückenlehne 14e und die weitere Rückenlehne 106e.

Grundsätzlich wäre es denkbar, dass das Befestigungselement 108e mit der Armlehne 50e und/oder mit dem Sitzteiler 92e fest verbunden ist. Dabei wäre es denkbar, dass die Infektionsschutztrenneinheit 32e zumindest ein Halteelement aufweist, welches das Befestigungselement 108e kraftschlüssig und/oder formschlüssig mit der Armlehne 50e und/oder mit dem Sitzteiler 92e verbindet. Das zumindest eine Halteelement kann dabei wie in dem zweiten Ausführungsbeispiel ausgebildet sein.

Alternativ wäre es denkbar, dass das Befestigungselement 108e lediglich eine einseitige Nut aufweist, wobei das Befestigungselement 108e an der Rückenlehne 14e oder an der weiteren Rückenlehne 106e angeordnet ist. Dabei wäre es denkbar, dass das Befestigungselement 108e an die Rückenlehne 14e oder die weitere Rückenlehne 106e angeklemmt ist. Grundsätzlich wäre es auch denkbar, dass das Befestigungselement 108e direkt mit einer Verkleidung der Rückenlehne 14e und/oder mit einem Grundrahmen der Rückenlehne 14e verbunden ist. Dabei wäre es denkbar, dass das Befestigungselement 108e auch kraftschlüssig und/oder stoffschlüssig mit der Rückenlehne 14e verbunden ist. Alternativ wäre es auch vorstellbar, dass die Rückenlehne 14e eine Montagenut, die insbesondere an der Verkleidung der Rückenlehne 14e und/oder an dem Grundrahmen der Rückenlehne 14e angebracht ist, aufweist, in die das Befestigungselement 108e, insbesondere formschlüssig, eingreift.

Die Infektionsschutztrenneinheit 32e weist ein Trennelement 36e auf. Das Trennelement 36e ist dazu vorgesehen, den Flugzeugsitzbereich 24e in dem Kopfbereich 30e von der Umgebung 34e des Flugzeugsitzbereichs 24e, insbesondere von dem weiteren Flugzeugsitzbereich 52e, abzutrennen. Das Trennelement 36e ist fest mit dem Befestigungselement 108e verbunden. Das Trennelement 36e ist frontal an dem Befestigungselement 108e angeordnet. Das Trennelement 36e ist über das Befestigungselement 108e mit der Rückenlehne 14e und mit der weiteren Rückenlehne 106e verbunden. Das Trennelement 36e ist einstückig mit dem Befestigungselement 108e ausgebildet. Das Trennelement 36e ist plattenförmig ausgebildet. Das Trennelement 36e weist eine L-förmige Grundform (Fig. 7) oder eine zumindest im Wesentlichen dreieckige Grundform (Fig. 8) auf. Alternativ kann das Trennelement 36e auch eine andere, für einen Fachmann geeignet erscheinende Form aufweisen. Das Trennelement 36e ist im vorliegenden Fall zumindest teilweise flexibel ausgebildet. Alternativ wäre es jedoch denkbar, dass das Trennelement 36e starr ausgebildet ist. Im vorliegenden Fall ist das Trennelement 36e aus einem Schaumstoff gebildet. Eine Haupterstreckungsebene des Trennelements 36e ist zumindest im Wesentlichen orthogonal zu der Aufständerebene ausgerichtet. Die Haupterstreckungsebene des Trennelements 36e ist zumindest im Wesentlichen parallel zu der Sitzrichtung 26e ausgerichtet. Das Trennelement 36e weist ein festes Ende 38e auf, welches mit dem Befestigungselement 108e starr verbunden ist. Das Trennelement 36e weist ein freies Ende 40e auf, welches von dem festen Ende 38e in der Sitzrichtung 26e beabstandet ist. Das Trennelement 36e erstreckt sich zumindest teilweise über die Oberkante 28e der Rückenlehne 14e hinaus. Das Trennelement 36e ist zwischen dem Flugzeugsitz 12e und dem weiteren Flugzeugsitz 46e angeordnet. Eine Achse orthogonal zu der Aufständerebene schneidet das Trennelement 36e und die Armlehne 50e. Im vorliegenden Fall ist das Trennelement 36e von der Armlehne 50e um mindestens 10 cm beabstandet angeordnet. Eine Achse orthogonal zu der Aufständerebene schneidet das Trennelement 36e und den Sitzteiler 92e. Grundsätzlich können das Befestigungselement 108e und/oder das Trennelement 36e ein Bezugselement aufweisen.

Die Flugzeugsitzvorrichtung 10e weist eine weitere Infektionsschutztrenneinheit 118e auf (Fig. 8). Die weitere Infektionsschutztrenneinheit 118e ist identisch mit der Infektionsschutztrenneinheit 32e ausgebildet. Die weitere Infektionsschutztrenneinheit 118e ist dazu vorgesehen, den weiteren Flugzeugsitzbereich 52e zumindest in einem weiteren Kopfbereich von einem anderen Flugzeugsitzbereich 120e eines anderen Flugzeugsitzes 90e abzutrennen.

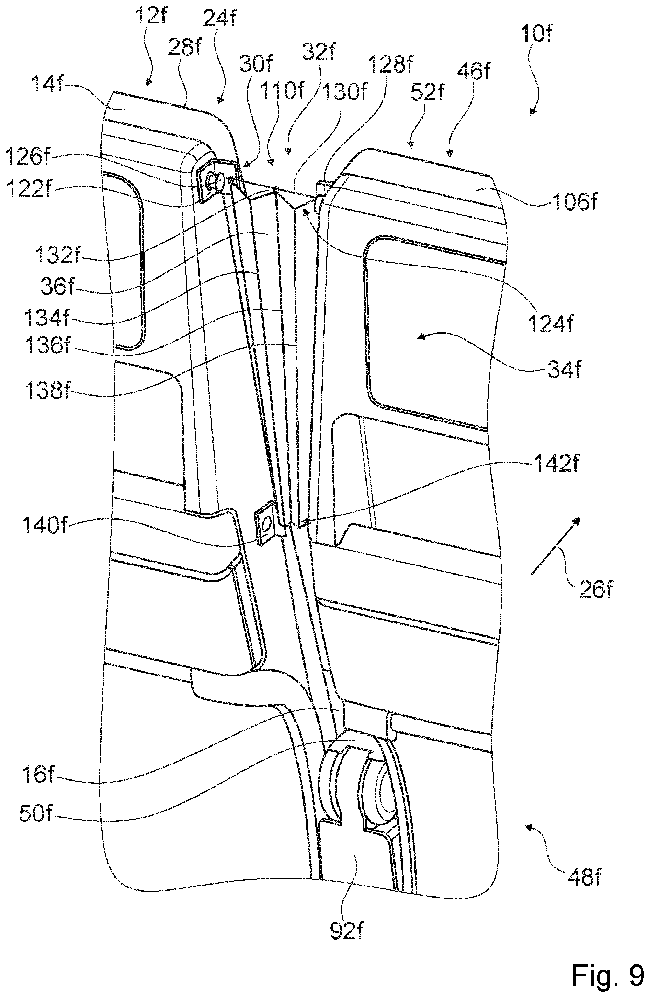

In der Figur 9 ist eine Flugzeugsitzvorrichtung 10f in einem sechsten Ausführungsbeispiel gezeigt. Die Flugzeugsitzvorrichtung 10f weist eine nicht näher dargestellte Aufständereinheit auf. Die Flugzeugsitzvorrichtung 10f umfasst einen Flugzeugsitz 12f. Der Flugzeugsitz 12f weist eine Rückenlehne 14f auf. Die Rückenlehne 14f des Flugzeugsitzes 12f kann verstellbar oder unverstellbar ausgebildet sein. Im vorliegenden Fall ist die Rückenlehne 14f verstellbar ausgebildet, wobei eine Neigung der Rückenlehne 14f durch einen Passagier anpassbar ist. Der Flugzeugsitz 12f weist eine Sitzbodeneinheit 16f auf. Der Flugzeugsitz 12f weist eine Sitzrichtung 26f auf. Der Flugzeugsitz 12f bildet einen Flugzeugsitzbereich 24f aus. Der Flugzeugsitz 12f bildet einen Kopfbereich 30f aus. Die Flugzeugsitzvorrichtung 10f umfasst einen weiteren Flugzeugsitz 46f. Der weitere Flugzeugsitz 46f weist eine weitere Rückenlehne 106f auf. Die weitere Rückenlehne 106f des weiteren Flugzeugsitzes 46f kann verstellbar oder unverstellbar ausgebildet sein. Im vorliegenden Fall ist die weitere Rückenlehne 106f verstellbar ausgebildet, wobei eine Neigung der weiteren Rückenlehne 106f durch einen Passagier anpassbar ist. Der weitere Flugzeugsitz 46f ist zumindest im Wesentlichen identisch zu dem Flugzeugsitz 12f ausgebildet. Der Flugzeugsitz 12f und der weitere Flugzeugsitz 46f bilden eine Sitzbank 48f aus. Der weitere Flugzeugsitz 46f ist gemeinsam mit dem Flugzeugsitz 12f in einer Sitzreihe angeordnet. Der Flugzeugsitz 12f und der weitere Flugzeugsitz 46f sind unmittelbar nebeneinander angeordnet. Der Flugzeugsitz 12f und der zumindest eine weitere Flugzeugsitz 46f sind gemeinsam über die Aufständereinheit auf der Aufständerebene aufgeständert. Die Flugzeugsitzvorrichtung 10f weist einen Sitzteiler 92f auf. Der Sitzteiler 92f ist unmittelbar zwischen dem Flugzeugsitz 12f und dem weiteren Flugzeugsitz 46f angeordnet. Der Flugzeugsitz 12f und der weitere Flugzeugsitz 46f sind lediglich durch den Sitzteiler 92f voneinander beabstandet. Die Flugzeugsitzvorrichtung 10f weist eine Armlehne 50f auf. Die Armlehne 50f ist an dem Sitzteiler 92f angeordnet. Die Armlehne 50f ist schwenkbar an dem Sitzteiler 92f gelagert. Die Armlehne 50f ist zwischen dem Flugzeugsitz 12f und dem weiteren Flugzeugsitz 46f angeordnet.

Die Flugzeugsitzvorrichtung 10f weist eine Infektionsschutztrenneinheit 32f auf. Im Unterschied zu dem fünften Ausführungsbeispiel ist die Infektionsschutztrenneinheit 32f alternativ an die Rückenlehne 14f angebunden. Die Infektionsschutztrenneinheit 32f ist an der Rückenlehne 14f des Flugzeugsitzes 12f und an der weiteren Rückenlehne 106f des weiteren Flugzeugsitzes 46f angeordnet. Die Infektionsschutztrenneinheit 32f ist dazu vorgesehen, den Flugzeugsitzbereich 24f zumindest in dem Kopfbereich 30f von einer Umgebung 34f des Flugzeugsitzbereichs 24f, insbesondere von einem anderen Flugzeugsitzbereich, welcher hinter dem Flugzeugsitz 12f angeordnet ist, abzutrennen. Die Infektionsschutztrenneinheit 32f ist dazu vorgesehen, einen weiteren Flugzeugsitzbereich 52f des weiteren Flugzeugsitzes 46f zumindest in einem weiteren Kopfbereich von der Umgebung 34f des weiteren Flugzeugsitzbereichs 52f, insbesondere von einem anderen Flugzeugsitzbereich, welcher hinter dem weiteren Flugzeugsitz 46f angeordnet ist, abzutrennen.

Die Infektionsschutztrenneinheit 32f weist ein Trennelement 36f auf. Das Trennelement 36f ist zwischen die Rückenlehne 14f des Flugzeugsitzes 12f und die weitere Rückenlehne 106f des weiteren Flugzeugsitzes 46f eingespannt. Das Trennelement 36f ist das dazu vorgesehen, einen Freiraum 110f zwischen der Rückenlehne 14f des Flugzeugsitzes 12f und der weiteren Rückenlehne 106f des weiteren Flugzeugsitzes 46f zumindest zu einem Großteil auszufüllen. Das Trennelement 36f ist dazu vorgesehen, den Freiraum 110f zwischen der Rückenlehne 14f und der weiteren Rückenlehne 106f oberhalb der Armlehne 50f bis zu einer Oberkante 28f der Rückenlehne 14f zumindest zu einem Großteil auszufüllen. Im vorliegenden Fall füllt das Trennelement 36f den Freiraum 110f mindesten zu 50 % aus. Das Trennelement 36f ist aus einem Textil und/oder aus einer Folie gebildet. Das Trennelement 36f kann als ein Vorhang ausgebildet sein. Grundsätzlich ist es denkbar, dass der Vorhang als ein Einwegvorhang ausgebildet ist. Das Trennelement 36f kann dazu vorgesehen sein, nach jedem Flug ausgetauscht zu werden. Das Trennelement 36f weist eine antivirale Beschichtung auf. Das Trennelement 36f weist eine optionale Faltung auf. Im vorliegenden Fall weist das Trennelement 36f drei Falten 134f, 136f, 138f auf. Die Falten 134f, 136f, 138f verlaufen im Wesentlichen vertikal. Dadurch kann eine vorteilhafte Flexibilität und eine vorteilhaft vordefinierte Optik des Trennelements 36f erreicht werden.

Die Infektionsschutztrenneinheit 32f weist ein fest mit der Rückenlehne 14f verbundenes erstes Befestigungselement 122f auf. Das Trennelement 36f ist an einem oberen Ende 124f des Trennelements 36f über das erste Befestigungselement 122f an die Rückenlehne 14f angebunden. Das obere Ende 124f des Trennelements 36f ist höchstens 5 cm von der Oberkante 28f der Rückenlehne 14f beabstandet. Das erste Befestigungselement 122f ist in einem seitlichen Bereich der Rückenlehne 14f angeordnet, welcher der weiteren Rückenlehne 106f zugewandt ist. Das erste Befestigungselement 122f ist kraftschlüssig, formschlüssig und/oder stoffschlüssig an einer Verkleidung der Rückenlehne 14f angeordnet. Grundsätzlich wäre es denkbar, dass das erste Befestigungselement 122f mittels eines Rastelements mit der Rückenlehne 14f verbunden ist. Dabei kann das Rastelement tannenbaumartig ausgebildet sein. Alternativ kann das erste Befestigungselement 122f mit der Rückenlehne 14f verschraubt oder vernietet sein. Dabei wäre es vorstellbar, dass in der Verkleidung der Rückenlehne 14f ein Insert angeordnet ist, welches insbesondere ein Gewinde aufweist. Das erste Befestigungselement 122f ist L-förmig ausgebildet. Das erste Befestigungselement 122f bildet zwei orthogonal zueinander ausgerichtete Platten aus, wobei eine Platte zu einer Anbindung des ersten Befestigungselements 122f an die Rückenlehne 14f und eine weitere Platte zu einer Anbindung des Trennelements 36f an das erste Befestigungselement 122f vorgesehen ist. Die Platte und die weitere Platte weisen jeweils ein Durchgangsloch auf. Das erste Befestigungselement 122f weist einen zylinderförmigen Fortsatz 126f auf. Der zylinderförmige Fortsatz 126f des ersten Befestigungselements 122f ist als ein Kleiderhaken der Rückenlehne 14f ausgebildet. Vorzugsweise kann für eine Nachrüstung der Infektionsschutztrenneinheit 32f ein Befestigungsmittel eines an der Rückenlehne 14f bereits bestehenden Kleiderhakens zu einer Montage des ersten Befestigungselements 122f genutzt werden.

Die Infektionsschutztrenneinheit 32f weist ein fest mit der weiteren Rückenlehne 106f verbundenes weiteres erstes Befestigungselement 128f auf. Das Trennelement 36f ist an dem oberen Ende 124f des Trennelements 36f über das weitere erste Befestigungselement 128f an die weitere Rückenlehne 106f angebunden. Das weitere erste Befestigungselement 128f ist in einem seitlichen Bereich der weiteren Rückenlehne 106f angeordnet, welcher der Rückenlehne 14f zugewandt ist. Das weitere erste Befestigungselement 128f ist zumindest im Wesentlichen identisch zu dem ersten Befestigungselement 122f ausgebildet. Das weitere erste Befestigungselement 122f ist kraftschlüssig, formschlüssig und/oder stoffschlüssig an einer Verkleidung der weiteren Rückenlehne 106f angeordnet. Das weitere erste Befestigungselement 128f weist einen weiteren zylinderförmigen Fortsatz auf, welcher als ein Kleiderhaken der weiteren Rückenlehne 106f ausgebildet ist.

Die Infektionsschutztrenneinheit 32f weist ein Verbindungselement 130f auf. Das Verbindungselement 130f verbindet das erste Befestigungselement 122f mit dem weiteren ersten Befestigungselement 128f. Das Verbindungselement 130f ist im vorliegenden Fall als ein Expanderseil ausgebildet. Dadurch kann sich die Infektionsschutztrenneinheit 32f bei einer Neigungsverstellung der Rückenlehne 14f oder der weiteren Rückenlehne 106f vorteilhaft anpassen. Alternativ kann das Verbindungselement 130f auch als ein anderes, einem Fachmann für geeignet erscheinendes Seil, als eine Schnur, als ein Draht oder als eine Kette ausgebildet sein.

Das Trennelement 36f ist mit dem Verbindungselement 130f gekoppelt. An der Falte 136f des Trennelements 36f, welche zumindest im Wesentlichen mittig zwischen der Rückenlehne 14f und der weiteren Rückenlehne 106f angeordnet ist, ist das Trennelement 36f mit dem Verbindungselement 130f verbunden. Die Infektionsschutztrenneinheit 32f ist an dem oberen Ende 124f des Trennelements 36f mit dem Verbindungselement 130f gekoppelt. Die Infektionsschutztrenneinheit 32f weist zumindest eine Öse 132f auf, mittels der das Trennelement 36f an dem oberen Ende 124f des Trennelements 36f mit dem Verbindungselement 130f gekoppelt ist. Im vorliegenden Fall ist das Trennelement 36f jeweils mittels einer nicht näher dargestellten Öse mit dem ersten Befestigungselement 122f und mit dem weiteren ersten Befestigungselement 128f verbunden. Alternativ wäre es denkbar, dass das Trennelement 36f stoffschlüssig mit dem ersten Befestigungselement 122f und dem weiteren ersten Befestigungselement 128f verbunden ist. Grundsätzlich wäre es dabei auch denkbar, dass das Trennelement 36f einstückig mit dem ersten Befestigungselement 122f und dem weiteren ersten Befestigungselement 128f ausgebildet ist.

Die Infektionsschutztrenneinheit 32f weist ein fest mit der Rückenlehne 14f verbundenes zweites Befestigungselement 140f auf. Das Trennelement 36f ist an einem unteren Ende 142f des Trennelements 36f über das zweite Befestigungselement 140f an die Rückenlehne 14f angebunden. Das untere Ende 142f des Trennelements 36f ist im vorliegenden Fall zwischen der Oberkante 28f der Rückenlehne 14f und der Armlehne 50f angeordnet. Im vorliegenden Fall ist das untere Ende 142f des Trennelements 36f mindestens 15 cm von der Armlehne 50f beabstandet, insbesondere in einer Gebrauchsstellung der Armlehne 50f. Das zweite Befestigungselement 140f ist in dem seitlichen Bereich der Rückenlehne 14f angeordnet, welcher der weiteren Rückenlehne 106f zugewandt ist. Das zweite Befestigungselement 140f ist kraftschlüssig, formschlüssig und/oder stoffschlüssig an einer Verkleidung der Rückenlehne 14f angeordnet. Grundsätzlich wäre es denkbar, dass das zweite Befestigungselement 140f mittels eines Rastelements mit der Rückenlehne 14f verbunden ist. Alternativ kann das zweite Befestigungselement 140f mit der Rückenlehne 14f verschraubt oder vernietet sein. Dabei wäre es vorstellbar, dass in der Verkleidung der Rückenlehne 14f ein weiteres Insert angeordnet ist, welches insbesondere ein Gewinde aufweist. Das zweite Befestigungselement 140f ist L-förmig ausgebildet. Das zweite Befestigungselement 140f bildet zwei orthogonal zueinander ausgerichtete Platten aus, wobei eine Platte zu einer Anbindung des zweiten Befestigungselements 140f an die Rückenlehne 14f und eine weitere Platte zu einer Anbindung des Trennelements 36f an das zweite Befestigungselement 140f vorgesehen ist.

Die Infektionsschutztrenneinheit 32f weist ein fest mit der weiteren Rückenlehne 106f verbundenes weiteres zweites Befestigungselement auf. Das weitere zweite Befestigungselement ist in der Figur 9 nicht sichtbar. Das weitere zweite Befestigungselement ist zumindest im Wesentlichen identisch zu dem zweiten Befestigungselement 140f ausgebildet. Das Trennelement 36f ist an dem unteren Ende 142f des Trennelements 36f über das weitere zweite Befestigungselement an die weitere Rückenlehne 106f angebunden. Das weitere zweite Befestigungselement ist in dem seitlichen Bereich der weiteren Rückenlehne 106f angeordnet, welcher der Rückenlehne 14f zugewandt ist. Das weitere zweite Befestigungselement ist kraftschlüssig, formschlüssig und/oder stoffschlüssig an einer Verkleidung der weiteren Rückenlehne 106f angeordnet.

Im vorliegenden Fall ist das Trennelement 36f jeweils mittels einer nicht näher dargestellten Öse der Infektionsschutztrenneinheit 32f mit dem zweiten Befestigungselement 140f und mit dem weiteren zweiten Befestigungselement verbunden. Alternativ wäre es denkbar, dass das Trennelement 36f stoffschlüssig mit dem zweiten Befestigungselement 140f und dem weiteren zweiten Befestigungselement verbunden ist. Grundsätzlich wäre es dabei auch denkbar, dass das Trennelement 36f einstückig mit dem zweiten Befestigungselement 140f und dem weiteren zweiten Befestigungselement ausgebildet ist.

Grundsätzlich wäre es denkbar, dass die Infektionsschutztrenneinheit 32f ein weiteres Verbindungselement an dem unteren Ende 142f des Trennelements 36f aufweist, wobei das weitere Verbindungselement vorzugsweise analog zu dem zuvor beschriebenen Verbindungselement ausgebildet ist.

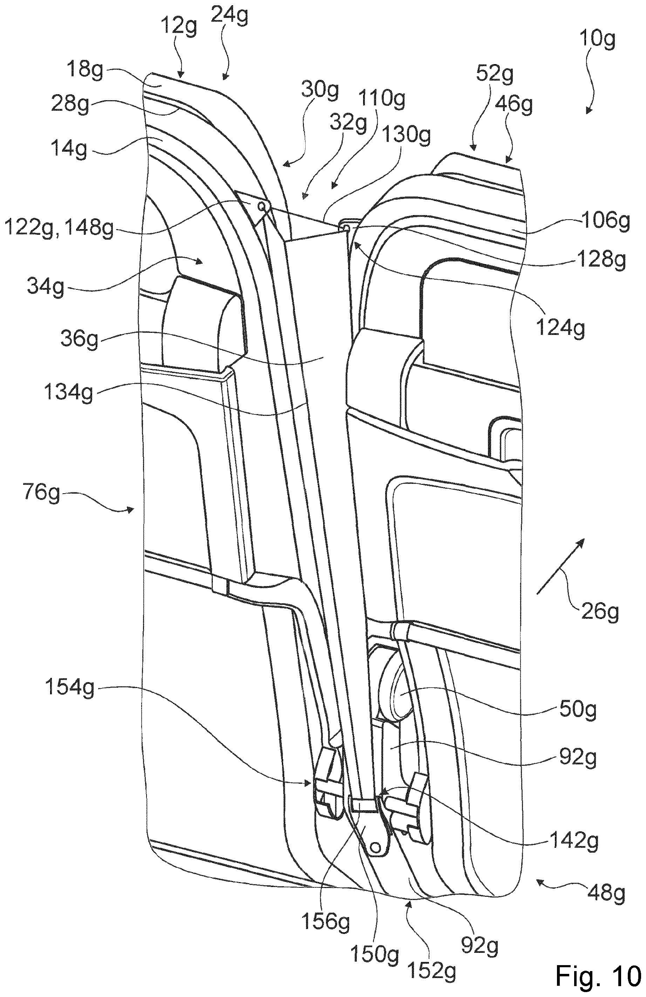

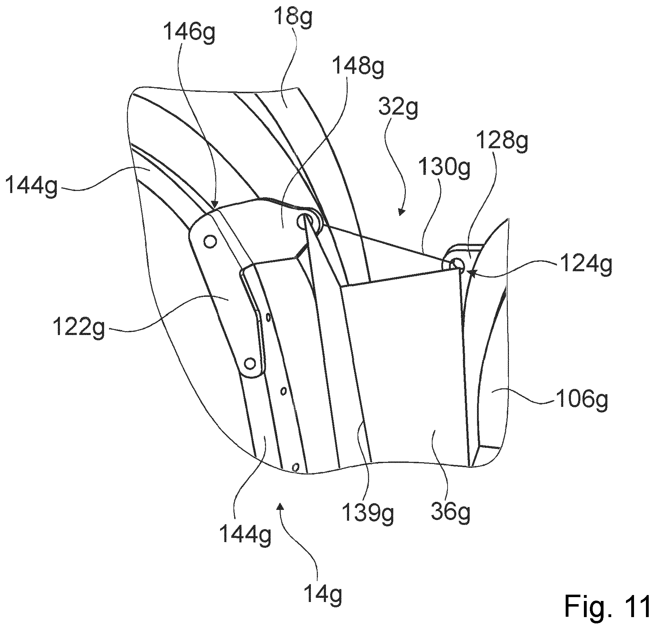

In den Figuren 10 und 11 ist eine Flugzeugsitzvorrichtung 10g in einem siebten Ausführungsbeispiel gezeigt. Die Flugzeugsitzvorrichtung 10g weist eine nicht näher dargestellte Aufständereinheit auf. Die Flugzeugsitzvorrichtung 10g umfasst einen Flugzeugsitz 12g. Der Flugzeugsitz 12g weist eine Rückenlehne 14g auf. Die Rückenlehne 14g des Flugzeugsitzes 12g kann verstellbar oder unverstellbar ausgebildet sein. Im vorliegenden Fall ist die Rückenlehne 14g verstellbar ausgebildet, wobei eine Neigung der Rückenlehne 14g durch einen Passagier anpassbar ist. Der Flugzeugsitz 12g weist eine Kopfstütze 18g auf. Der Flugzeugsitz 12g weist eine Sitzrichtung 26g auf. Der Flugzeugsitz 12g bildet einen Flugzeugsitzbereich 24g aus. Der Flugzeugsitz 12g bildet einen Kopfbereich 30g aus. Die Flugzeugsitzvorrichtung 10g umfasst einen weiteren Flugzeugsitz 46g. Der weitere Flugzeugsitz 46g weist eine weitere Rückenlehne 106g auf. Die weitere Rückenlehne 106g des weiteren Flugzeugsitzes 46g kann verstellbar oder unverstellbar ausgebildet sein. Im vorliegenden Fall ist die weitere Rückenlehne 106g verstellbar ausgebildet, wobei eine Neigung der weiteren Rückenlehne 106g durch einen Passagier anpassbar ist. Der weitere Flugzeugsitz 46g ist zumindest im Wesentlichen identisch zu dem Flugzeugsitz 12g ausgebildet. Der Flugzeugsitz 12g und der weitere Flugzeugsitz 46g bilden eine Sitzbank 48g aus. Die Flugzeugsitzvorrichtung 10g weist einen Sitzteiler 92g auf. Der Sitzteiler 92g ist unmittelbar zwischen dem Flugzeugsitz 12g und dem weiteren Flugzeugsitz 46g angeordnet. Der Flugzeugsitz 12g und der weitere Flugzeugsitz 46g sind lediglich durch den Sitzteiler 92g voneinander beabstandet. Die Flugzeugsitzvorrichtung 10g weist eine Armlehne 50g auf. Die Armlehne 50g ist an dem Sitzteiler 92g angeordnet. Die Armlehne 50g ist schwenkbar an dem Sitzteiler 92g gelagert.

Die Flugzeugsitzvorrichtung 10g weist eine Infektionsschutztrenneinheit 32g auf. Im Unterschied zu dem sechsten Ausführungsbeispiel ist die Infektionsschutztrenneinheit 32g alternativ an die Flugzeugsitzvorrichtung 10g angebunden. Die Infektionsschutztrenneinheit 32g ist an dem Sitzteiler 92g angebunden. Die Infektionsschutztrenneinheit 32g ist an der Rückenlehne 14g des Flugzeugsitzes 12g und an der weiteren Rückenlehne 106g des weiteren Flugzeugsitzes 46g angeordnet. Die Infektionsschutztrenneinheit 32g ist dazu vorgesehen, den Flugzeugsitzbereich 24g zumindest in dem Kopfbereich 30g von einer Umgebung 34g des Flugzeugsitzbereichs 24g, insbesondere von einem anderen Flugzeugsitzbereich, welcher hinter dem Flugzeugsitz 12g angeordnet ist, abzutrennen. Die Infektionsschutztrenneinheit 32g ist dazu vorgesehen, einen weiteren Flugzeugsitzbereich 52g des weiteren Flugzeugsitzes 46g zumindest in einem weiteren Kopfbereich von der Umgebung 34g des weiteren Flugzeugsitzbereichs 52g, insbesondere von einem anderen Flugzeugsitzbereich, welcher hinter dem weiteren Flugzeugsitz 46g angeordnet ist, abzutrennen.

Die Infektionsschutztrenneinheit 32g weist ein Trennelement 36g auf. Das Trennelement 36g ist zwischen die Rückenlehne 14g des Flugzeugsitzes 12g und die weitere Rückenlehne 106g des weiteren Flugzeugsitzes 46g eingespannt. Das Trennelement 36g ist das dazu vorgesehen, einen Freiraum 110g zwischen der Rückenlehne 14g des Flugzeugsitzes 12g und der weiteren Rückenlehne 106g des weiteren Flugzeugsitzes 46g zumindest zu einem Großteil auszufüllen. Das Trennelement 36g ist dazu vorgesehen, den Freiraum 110g zwischen der Rückenlehne 14g und der weiteren Rückenlehne 106g von dem Sitzteiler 92g bis zu einer Oberkante 28g der Rückenlehne 14g zumindest zu einem Großteil auszufüllen. Im vorliegenden Fall füllt das Trennelement 36g den Freiraum 110g mindesten zu 75 % aus. Das Trennelement 36g weist eine optionale Faltung auf. Im vorliegenden Fall weist das Trennelement 36g eine Falte 134g auf. Die Falte 134g verläuft im Wesentlichen vertikal.

Die Infektionsschutztrenneinheit 32g weist ein fest mit der Rückenlehne 14g verbundenes erstes Befestigungselement 122g auf. Das Trennelement 36g ist an einem oberen Ende 124g des Trennelements 36g über das erste Befestigungselement 122g an die Rückenlehne 14g angebunden. Das erste Befestigungselement 122g ist in einem seitlichen Bereich der Rückenlehne 14g angeordnet, welcher der weiteren Rückenlehne 106g zugewandt ist. In der Figur 11 ist die Rückenlehne 14g ohne eine Verkleidung der Rückenlehne 14g dargestellt. Das erste Befestigungselement 122g ist kraftschlüssig, formschlüssig und/oder stoffschlüssig mit einem Grundrahmen 144g der Rückenlehne 14g verbunden (Fig. 11). Das erste Befestigungselement 122g ist plattenförmig ausgebildet. Das erste Befestigungselement 122g weist eine Kröpfung 146g auf. Das erste Befestigungselement 122g weist einen Fortsatz 148g auf, der aus der Rückenlehne 14f in den Freiraum 110g hineinragt. Die Kröpfung 146g ist zwischen dem Grundrahmen 144g der Rückenlehne 14g und dem aus der Rückenlehne 14f herausragenden Fortsatz 148g des ersten Befestigungselements 122g angeordnet. Der Fortsatz 148g ist als ein Anbindungspunkt für das Trennelement 36g ausgebildet. Das erste Befestigungselement 122g ist in einem montierten Zustand lediglich teilweise sichtbar. Der aus der Rückenlehne 14g herausragende Fortsatz 148g des ersten Befestigungselements 122g ist zu einer Anbindung des Trennelements 36g an das erste Befestigungselement 122g vorgesehen. Der Fortsatz 148g weist ein Durchgangsloch auf.

Die Infektionsschutztrenneinheit 32g weist ein fest mit der Rückenlehne 14g verbundenes weiteres erstes Befestigungselement 128g auf. Das Trennelement 36g ist an dem oberen Ende 124g des Trennelements 36g über das weitere erste Befestigungselement 128g an die weitere Rückenlehne 106g angebunden. Das weitere erste Befestigungselement 128g ist in einem seitlichen Bereich der weiteren Rückenlehne 106g angeordnet, welcher der Rückenlehne 14g zugewandt ist. Das weitere erste Befestigungselement 128g ist kraftschlüssig, formschlüssig und/oder stoffschlüssig mit einem nicht näher dargestellten Grundrahmen der weiteren Rückenlehne 106g verbunden. Das weitere erste Befestigungselement 128g ist zumindest im Wesentlichen identisch zu dem ersten Befestigungselement 122g ausgebildet.

Die Infektionsschutztrenneinheit 32g weist ein Verbindungselement 130g auf. Das Verbindungselement 130g verbindet das erste Befestigungselement 122g mit dem weiteren ersten Befestigungselement 128g. Das Verbindungselement 130g ist im vorliegenden Fall als ein Expanderseil ausgebildet. Alternativ kann das Verbindungselement 130g auch als ein anderes, einem Fachmann für geeignet erscheinendes Seil, als eine Schnur, als ein Draht oder als eine Kette ausgebildet sein. Das Trennelement 36g ist mit dem Verbindungselement 130g gekoppelt. Im vorliegenden Fall ist das Verbindungselement 130g an dem oberen Ende 124g des Trennelements 36g zumindest teilweise durch das Trennelement 36g hindurchgeführt. Das Verbindungselement 130g ist durch das Trennelement 36g, durch das Durchgangsloch des Fortsatzes 148g des ersten Befestigungselements 122g und durch ein Durchgangsloch eines Fortsatzes des weiteren ersten Befestigungselements 128g geführt.

Die Infektionsschutztrenneinheit 32g weist ein zweites Befestigungselement 150g auf. Das zweite Befestigungselement 150g verbindet das Trennelement 36g fest mit dem Sitzteiler 92g. Der Sitzteiler 92g ist zwischen dem Flugzeugsitz 12g und dem weiteren Flugzeugsitz 46g angeordnet. Das zweite Befestigungselement 150g ist an einer Rückseite 152g des Sitzteilers 92g, insbesondere in einem Kniebereich eines hinter dem Flugzeugsitz 12g sitzenden Passagiers, angeordnet. Das zweite Befestigungselement 150g weist eine Öse 156g auf, durch die das Trennelement 36g geführt ist. Das Trennelement 36g ist an dem zweiten Befestigungselement 150g vernäht oder verschweißt, sodass das Trennelement 36g formschlüssig mit dem zweiten Befestigungselement 150g verbunden ist.

Das Trennelement 36g ist an einem unteren Ende 142g des Trennelements 36g über das zweite Befestigungselement 150g an den Sitzteiler 92g angebunden. Das untere Ende 142g des Trennelements 36g ist im vorliegenden Fall zwischen der Armlehne 50g und der Aufständerebene angeordnet. Im vorliegenden Fall ist das untere Ende 142g des Trennelements 36g mindestens 5 cm von der Armlehne 50g beabstandet. Der Flugzeugsitz 12g weist eine Tischeinheit 76g auf, die an der Rückseite der Rückenlehne 14g angeordnet ist. Die Tischeinheit 76g umfasst zumindest eine Schwenkmechanik 154g, mittels der die Tischeinheit 76g in verschiedene Stellungen überführbar ist. Die Schwenkmechanik 154g ist an dem Sitzteiler 92g angeordnet. Eine Ebene parallel zu der Aufständerebene schneidet das zweite Befestigungselement 150g und die Schwenkmechanik 154g. Eine Ebene parallel zu der Aufständerebene schneidet das Trennelement 36g und die Schwenkmechanik 154g.

Das zweite Befestigungselement 150g ist zentral zwischen der Rückenlehne 14g und der weiteren Rückenlehne 106g angeordnet. Das zweite Befestigungselement 150g ist kraftschlüssig, formschlüssig und/oder stoffschlüssig mit dem Sitzteiler 92g und/oder mit einer Verkleidung des Sitzteilers 92g verbunden. Grundsätzlich wäre es denkbar, dass das zweite Befestigungselement 150g mit dem Sitzteiler 92g verschraubt ist. Grundsätzlich wäre es denkbar, dass das zweite Befestigungselement 150g eine nicht näher dargestellte Verkleidung des Sitzteilers 92g ersetzt, wobei ein Befestigungsmittel des Sitzteilers 92g, welches zu einer Befestigung der Verkleidung an dem Sitzteiler 92g vorgesehen ist, für eine Montage des zweiten Befestigungselements 150g genutzt werden kann. Alternativ könnte das zweite Befestigungselement 150g auch mittels eines Hakens in den Sitzteiler 92g eingehängt werden.

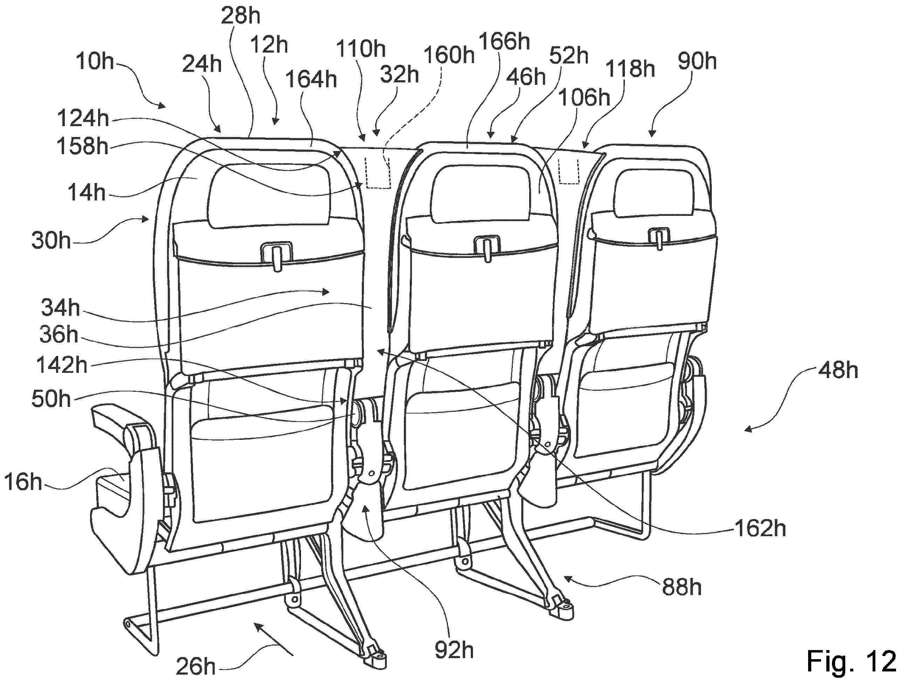

In der Figur 12 ist eine Flugzeugsitzvorrichtung 10h in einem achten Ausführungsbeispiel gezeigt. Die Flugzeugsitzvorrichtung 10h weist eine Aufständereinheit 88h auf. Die Flugzeugsitzvorrichtung 10h umfasst einen Flugzeugsitz 12h. Der Flugzeugsitz 12h weist eine Rückenlehne 14h auf. Im vorliegenden Fall ist die Rückenlehne 14h verstellbar ausgebildet. Grundsätzlich kann die Rückenlehne 14h aber auch unverstellbar ausgebildet sein. Der Flugzeugsitz 12h weist eine Sitzbodeneinheit 16h auf. Der Flugzeugsitz 12h weist eine Sitzrichtung 26h auf. Der Flugzeugsitz 12h bildet einen Flugzeugsitzbereich 24h aus. Der Flugzeugsitz 12h bildet einen Kopfbereich 30h aus. Die Flugzeugsitzvorrichtung 10h umfasst zwei weitere Flugzeugsitze 46h, 90h. Der weitere Flugzeugsitz 46h weist eine weitere Rückenlehne 106h auf. Die weitere Rückenlehne 106h des weiteren Flugzeugsitzes 46h ist im vorliegenden Fall verstellbar ausgebildet. Grundsätzlich kann die weitere Rückenlehne 106h aber auch unverstellbar ausgebildet sein. Die weiteren Flugzeugsitze 46h, 90h sind zumindest im Wesentlichen identisch zu dem Flugzeugsitz 12h ausgebildet. Der Flugzeugsitz 12h und die weiteren Flugzeugsitze 46h, 90h bilden eine Sitzbank 48h aus. Die Flugzeugsitzvorrichtung 10h weist einen Sitzteiler 92h auf. Die Flugzeugsitzvorrichtung 10h weist eine Armlehne 50h auf.

Die Flugzeugsitzvorrichtung 10h weist eine Infektionsschutztrenneinheit 32h auf. Im Unterschied zu dem sechsten Ausführungsbeispiel und dem siebten Ausführungsbeispiel ist die Infektionsschutztrenneinheit 32h alternativ an die Rückenlehne 14h und die weitere Rückenlehne 106h angebunden.

Die Infektionsschutztrenneinheit 32h ist an der Rückenlehne 14h des Flugzeugsitzes 12h und an der weiteren Rückenlehne 106h des weiteren Flugzeugsitzes 46h angeordnet. Die Infektionsschutztrenneinheit 32h ist dazu vorgesehen, den Flugzeugsitzbereich 24h zumindest in dem Kopfbereich 30h von einer Umgebung 34h des Flugzeugsitzbereichs 24h, insbesondere von einem anderen Flugzeugsitzbereich, welcher hinter dem Flugzeugsitz 12h angeordnet ist, abzutrennen. Die Infektionsschutztrenneinheit 32h ist dazu vorgesehen, einen weiteren Flugzeugsitzbereich 52h des weiteren Flugzeugsitzes 46h zumindest in einem weiteren Kopfbereich von der Umgebung 34h des weiteren Flugzeugsitzbereichs 52h, insbesondere von einem anderen Flugzeugsitzbereich, welcher hinter dem weiteren Flugzeugsitz 46h angeordnet ist, abzutrennen.

Die Infektionsschutztrenneinheit 32h weist ein Trennelement 36h auf. Das Trennelement 36h ist zwischen die Rückenlehne 14h des Flugzeugsitzes 12h und die weitere Rückenlehne 106h des weiteren Flugzeugsitzes 46h eingespannt. In der Figur 12 ist das Trennelement 36h gespannt dargestellt. Grundsätzlich wäre es aber auch denkbar, dass das Trennelement 36h nicht zwischen der Rückenlehne 14h und der weiteren Rückenlehne 106h gespannt ist. Dabei wäre das Trennelement 36h um eine Achse, die zumindest im Wesentlichen orthogonal zu der Aufständerebene ausgerichtet ist, gewölbt. Das Trennelement 36h ist dazu vorgesehen, einen Freiraum 110h zwischen der Rückenlehne 14h des Flugzeugsitzes 12h und der weiteren Rückenlehne 106h des weiteren Flugzeugsitzes 46h zumindest zu einem Großteil auszufüllen. Der Freiraum 110h erstreckt sich von der Armlehne 50h bis zu einer Oberkante 28h der Rückenlehne 14h. Das Trennelement 36h ist zwischen der Oberkante 28h der Rückenlehne 14h und der Armlehne 50h angeordnet. Im vorliegenden Fall füllt das Trennelement 36h den Freiraum 110h mindestens zu 90 % aus. Ein oberes Ende 124h des Trennelements 36h ist von der Oberkante 28h der Rückenlehne 14h höchstens 5 cm beabstandet. Im vorliegenden Fall weist das Trennelement 36h an seinem oberen Ende 124h eine gerade Außenkontur auf. Alternativ wäre es jedoch auch denkbar, dass das Trennelement 36h an seinem oberen Ende 124h eine gewölbte Außenkontur aufweist. Ein unteres Ende 142h des Trennelements 36h ist von der Armlehne 50h höchstens 5 cm beabstandet. Grundsätzlich wäre es auch denkbar, dass das untere Ende 142h des Trennelements 36h einen größeren Abstand zu der Armlehne 50h aufweist. Das Trennelement 36h ist aus einem Textil und/oder einem Leder, insbesondere Kunstleder, gebildet. Alternativ wäre es auch denkbar, dass das Trennelement 36h aus einem beschichteten Papierwerkstoff gebildet ist. Das Trennelement 36h ist bevorzugt zumindest teilweise aus einem elastischen Material gebildet. Dadurch kann eine vorteilhafte Anpassung des Trennelements 36h bei einer Verschwenkung der Rückenlehne 14h und/oder der weiteren Rückenlehne 106h ermöglicht werden. Grundsätzlich wäre es denkbar, dass das Trennelement 36h lediglich in einem Anbindungsbereich an die Rückenlehne 14h und/oder einem weiteren Anbindungsbereich an die weitere Rückenlehne 106h elastische Eigenschaften aufweist.

Die Rückenlehne 14h weist ein Bezugselement 164h auf. Das Bezugselement 164h ist aus einem Textil und/oder einem Leder, insbesondere Kunstleder, gebildet. Das Bezugselement 164h ist als ein wechselbarer Überzug der Rückenlehne 14h ausgebildet, welcher an der Rückenlehne 14h befestigbar ist. Das Bezugselement 164h ist zu einem Kontakt mit einem auf dem Flugzeugsitz 12h sitzenden Passagier vorgesehen. Die weitere Rückenlehne 106h weist ein weiteres Bezugselement 166h auf. Das weitere Bezugselement 166h ist aus einem Textil und/oder einem Leder, insbesondere Kunstleder, gebildet. Das weitere Bezugselement 166h ist als ein wechselbarer Überzug der weiteren Rückenlehne 106h ausgebildet, welcher an der weiteren Rückenlehne 106h befestigbar ist. Das weitere Bezugselement 166h ist zu einem Kontakt mit einem auf dem weiteren Flugzeugsitz 46h sitzenden Passagier vorgesehen.

Das Trennelement 36h ist einstückig mit dem Bezugselement 164h der Rückenlehne 14h und mit dem weiteren Bezugselement 166h der weiteren Rückenlehne 106h ausgebildet. Das Trennelement 36h ist mit dem Bezugselement 164h vernäht. Das Trennelement 36h ist mit dem weiteren Bezugselement 166h vernäht. Alternativ wäre es denkbar, dass das Trennelement 36h zumindest einen Keder aufweist, welcher in einer Kederschiene der Rückenlehne 14h und/oder in einer weiteren Kederschiene der weiteren Rückenlehne 106h angeordnet ist. Alternativ wäre es denkbar, dass das Trennelement 36h mittels zumindest eines Reißverschlusses, mittels zumindest eines Flausch- und Hakenbands und/oder mittels zumindest eines Druckknopfes mit der Rückenlehne 14h und/oder mit der weiteren Rückenlehne 106h verbunden ist. Dabei könnte das zumindest eine Flausch- und Hakenband direkt an dem Bezugselement 164h der Rückenlehne 14h angebracht sein. Dadurch könnte eine vorteilhaft einfache Anbindung des Trennelements 36h an die Rückenlehne 14h erfolgen. Alternativ wäre es denkbar, dass das Trennelement 36h zwischen das Bezugselement 164h und eine Verkleidung der Rückenlehne 14h geklemmt ist.

Das Trennelement 36h umfasst zumindest ein nicht näher dargestelltes formgebendes Element. Das zumindest eine formgebende Element ist dazu vorgesehen, eine Formstabilität des Trennelements 36h bereitzustellen. Das zumindest eine formgebende Element ist dazu vorgesehen, das Trennelement 36h definiert auszurichten und/oder zu wölben. Das zumindest eine formgebende Element ist in das Trennelement 36h eingebracht. Das zumindest eine formgebende Element kann als eine Kordel, als ein Draht, als ein Band, als ein Stab und/oder als ein Federelement ausgebildet sein. Das zumindest eine formgebende Element kann aus einem Kunststoff und/oder aus einem Metall gebildet sein. Grundsätzlich wäre es denkbar, dass formgebende Elemente an dem oberen Ende 124h des Trennelements 36h, in einem mittleren Bereich des Trennelements 36h und/oder an dem unteren Ende 142h des Trennelements 36h angeordnet sind. Dadurch kann eine besonders vorteilhafte Optik des Trennelements 36h erzielt werden. Des Weiteren kann dadurch eine Bildung von Schmutzfallen vorteilhaft vermieden werden, wodurch eine vorteilhaft hygienische Infektionsschutztrenneinheit 32h bereitgestellt werden kann.

Vorteilhafterweise weist die Infektionsschutztrenneinheit 32h zumindest eine nicht näher dargestellte Sollbruchstelle auf. Die zumindest eine Sollbruchstelle ist dazu vorgesehen, die Rückenlehne 14h von der weiteren Rückenlehne 106h in einem Crashfall bei einer definierten Krafteinwirkung auf die Rückenlehne 14h, auf die weitere Rückenlehne 106h und/oder auf das Trennelement 36h zu entkoppeln.

Die Infektionsschutztrenneinheit 32h umfasst zumindest eine optionale Verstaueinheit 158h. Die Verstaueinheit 158h ist zur Aufnahme von kleinen persönlichen Gegenständen eines Passagiers, insbesondere einer Schutzmaske, eines Desinfektionstuchs, eines Desinfektionsmittels und/oder eines anderen, dem Fachmann für geeignet erscheinenden Hygieneartikels vorgesehen. Grundsätzlich kann die Verstaueinheit 158h auch zur Aufnahme von anderen Gegenständen, wie beispielsweise einem Reisepass, einer Bordkarte, einer Safety-Card, eines Abfallbeutels, einer Menükarte und/oder einer Lektüre, vorgesehen sein. Die Verstaueinheit 158h weist zumindest eine Tasche 160h auf, die an dem Trennelement 36h angeordnet ist. Die Tasche 160h ist in das Trennelement 36h integriert. Die Tasche 160h ist mit dem Trennelement 36h vernäht und/oder verschweißt. Im vorliegenden Fall ist die Tasche 160h in einem oberen Bereich des Trennelements 36h angeordnet. Grundsätzlich kann die Tasche 160h auch an einer anderen, dem Fachmann für geeignet erscheinende Stelle des Trennelements 36h angeordnet sein. Eine Öffnung der Tasche 160h weist in Richtung des oberen Endes 124h des Trennelements 36h. Die Tasche 160h kann von einer Rückseite 162h des Trennelements 36h oder von einer Vorderseite des Trennelements 36h zugänglich sein. Das in der Figur 12 gezeigte Format der Tasche 160h ist beispielhaft. Grundsätzlich kann das Format der Tasche 160h auch anders als abgebildet ausgebildet sein. Die Öffnung der Tasche 160h könnte grundsätzlich auch seitlich angeordnet sein.

Die Flugzeugsitzvorrichtung 10h weist eine weitere Infektionsschutztrenneinheit 118h auf. Die weitere Infektionsschutztrenneinheit 118h ist identisch mit der Infektionsschutztrenneinheit 32h ausgebildet.

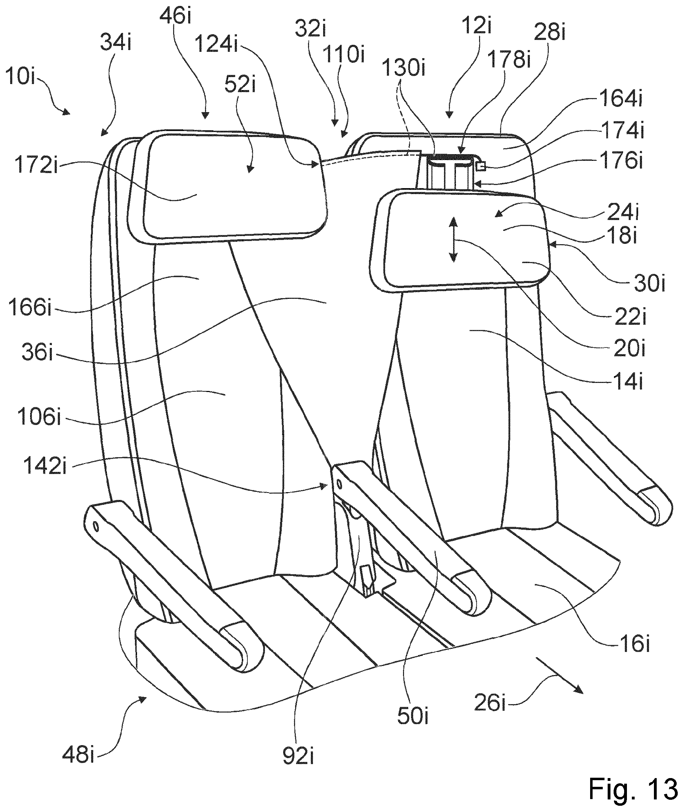

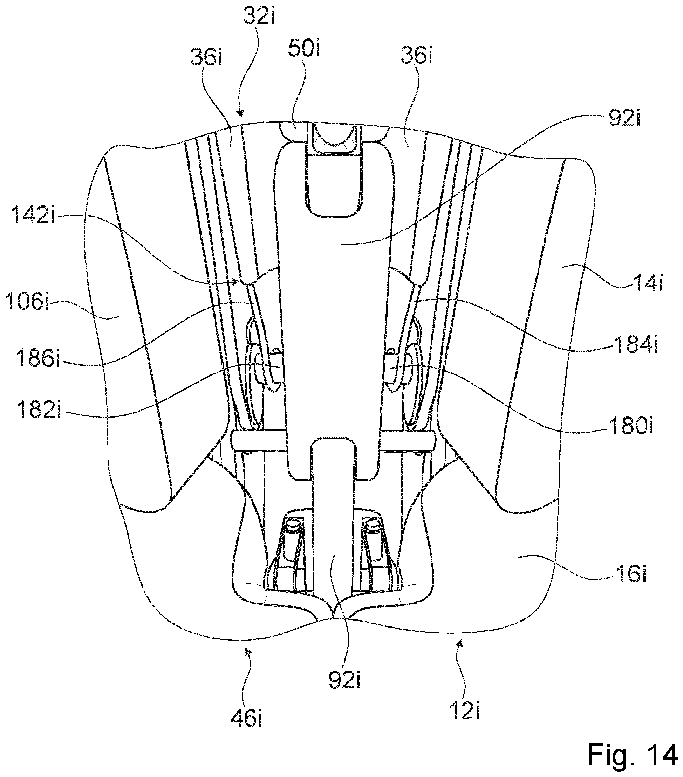

In den Figuren 13 und 14 ist eine Flugzeugsitzvorrichtung 10i in einem neunten Ausführungsbeispiel gezeigt. Die Flugzeugsitzvorrichtung 10i weist eine nicht näher dargestellte Aufständereinheit auf. Die Flugzeugsitzvorrichtung 10i umfasst einen Flugzeugsitz 12i. Der Flugzeugsitz 12i weist eine Rückenlehne 14i auf. Im vorliegenden Fall ist die Rückenlehne 14i verstellbar ausgebildet. Grundsätzlich kann die Rückenlehne 14i aber auch unverstellbar ausgebildet sein. Die Rückenlehne 14i weist ein Bezugselement 164i auf. Der Flugzeugsitz 12i weist eine Sitzbodeneinheit 16i auf. Der Flugzeugsitz 12i weist eine Kopfstütze 18i auf. Die Kopfstütze 18i ist an der Rückenlehne 14i angeordnet. Die Kopfstütze 18i ist beweglich an der Rückenlehne 14i gelagert. Die Kopfstütze 18i ist in einer Richtung 20i zumindest im Wesentlichen orthogonal zu der Aufständerebene in einem definierten Bereich verschiebbar. Die Kopfstütze 18i weist ein Bezugselement 22i auf. Der Flugzeugsitz 12i weist eine Sitzrichtung 26i auf. Der Flugzeugsitz 12i bildet einen Flugzeugsitzbereich 24i aus. Der Flugzeugsitz 12i bildet einen Kopfbereich 30i aus. Die Flugzeugsitzvorrichtung 10i umfasst einen weiteren Flugzeugsitz 46i. Der weitere Flugzeugsitz 46i weist eine weitere Rückenlehne 106i auf. Die weitere Rückenlehne 106i des weiteren Flugzeugsitzes 46i ist im vorliegenden Fall verstellbar ausgebildet. In der Figur 13 ist die weitere Rückenlehne 106i gegenüber der Rückenlehne 14i verschwenkt dargestellt. Grundsätzlich kann die weitere Rückenlehne 106i aber auch unverstellbar ausgebildet sein. Die weitere Rückenlehne 106i weist ein weiteres Bezugselement 166i auf. Der weitere Flugzeugsitz 46i weist eine weitere Kopfstütze 172i auf. Die weitere Kopfstütze 172i ist zumindest im Wesentlichen identisch mit der Kopfstütze 18i ausgebildet. Der weitere Flugzeugsitz 46i ist zumindest im Wesentlichen identisch zu dem Flugzeugsitz 12i ausgebildet. Der Flugzeugsitz 12i und der weitere Flugzeugsitz 46i bilden eine Sitzbank 48i aus. Die Flugzeugsitzvorrichtung 10i weist einen Sitzteiler 92i auf. Die Flugzeugsitzvorrichtung 10i weist eine Armlehne 50i auf.

Die Flugzeugsitzvorrichtung 10i weist eine Infektionsschutztrenneinheit 32i auf. Die Infektionsschutztrenneinheit 32i ist an der Rückenlehne 14i des Flugzeugsitzes 12i und an der weiteren Rückenlehne 106i des weiteren Flugzeugsitzes 46i angeordnet. Die Infektionsschutztrenneinheit 32i ist dazu vorgesehen, den Flugzeugsitzbereich 24i zumindest in dem Kopfbereich 30i von einer Umgebung 34i des Flugzeugsitzbereichs 24i, insbesondere von einem anderen Flugzeugsitzbereich, welcher hinter dem Flugzeugsitz 12i angeordnet ist, abzutrennen. Die Infektionsschutztrenneinheit 32i ist dazu vorgesehen, einen weiteren Flugzeugsitzbereich 52i des weiteren Flugzeugsitzes 46i zumindest in einem weiteren Kopfbereich von der Umgebung 34i des weiteren Flugzeugsitzbereichs 52i, insbesondere von einem anderen Flugzeugsitzbereich, welcher hinter dem weiteren Flugzeugsitz 46i angeordnet ist, abzutrennen. Die Infektionsschutztrenneinheit 32i weist ein Trennelement 36i auf. Das Trennelement 36i ist teilweise zwischen der Rückenlehne 14i des Flugzeugsitzes 12i und der weiteren Rückenlehne 106i des weiteren Flugzeugsitzes 46i angeordnet. Das Trennelement 36i ist dazu vorgesehen, einen Freiraum 110i zwischen der Rückenlehne 14i des Flugzeugsitzes 12i und der weiteren Rückenlehne 106i des weiteren Flugzeugsitzes 46i zumindest zu einem Großteil auszufüllen. Der Freiraum 110i erstreckt sich von der Sitzbodeneinheit 16i bis zu einer Oberkante 28i der Rückenlehne 14i. Das Trennelement 36i ist zwischen der Oberkante 28i der Rückenlehne 14i und der Sitzbodeneinheit 16i angeordnet. Im vorliegenden Fall füllt das Trennelement 36i den Freiraum 110i mindestens zu 90 % aus. Ein oberes Ende 124i des Trennelements 36i ist von der Oberkante 28i der Rückenlehne 14i höchstens 5 cm beabstandet. Ein unteres Ende 142i des Trennelements 36i ist von der Sitzbodeneinheit 16i höchstens 10 cm beabstandet. Das Trennelement 36i ist aus einem Textil und/oder einem Leder, insbesondere Kunstleder, gebildet. Das Trennelement 36i ist bevorzugt zumindest teilweise aus einem elastischen Material gebildet. Das Trennelement 36i weist eine im Wesentlichen dreieckige Form auf. Das Trennelement 36i verjüngt sich ausgehend von dem oberen Ende 124i des Trennelements 36h hin zu dem unteren Ende 142i des Trennelements 36i.

Im Unterschied zu dem achten Ausführungsbeispiel ist die Infektionsschutztrenneinheit 32i alternativ an die Rückenlehne 14i, die weitere Rückenlehne 106i und den Sitzteiler 92i angebunden. Das Trennelement 36i ist teilweise auf einer Rückenabstützfläche der Rückenlehne 14i angeordnet. Das Trennelement 36i ist teilweise auf dem Bezugselement 164i der Rückenlehne 14i angeordnet. Das Trennelement 36i ist lose auf dem Bezugselement 164i angeordnet. Das Trennelement 36i ist teilweise auf einer weiteren Rückenabstützfläche der weiteren Rückenlehne 106i angeordnet. Das Trennelement 36i ist teilweise auf dem weiteren Bezugselement 166i der weiteren Rückenlehne 106i angeordnet. Das Trennelement 36i ist lose auf dem weiteren Bezugselement 166i angeordnet. Das Trennelement 36i ist um eine Achse, die zumindest im Wesentlichen orthogonal zu einer Aufständerebene ausgerichtet ist, teilweise gewölbt. Im vorliegenden Fall ist das Trennelement 36i in einem Bereich zwischen der Rückenlehne 14i und der weiteren Rückenlehne 106i konkav zu der Rückenabstützfläche der Rückenlehne 14i und zu der weiteren Rückenabstützfläche der weiteren Rückenlehne 106i gewölbt.

Die Infektionsschutztrenneinheit 32i weist ein mit der Rückenlehne 14i koppelbares erstes Befestigungselement 174i auf. Das erste Befestigungselement 174i ist in einem mittigen Bereich der Rückenlehne 14i angeordnet. Das Trennelement 36i ist an einem oberen Ende 124i des Trennelements 36i über das erste Befestigungselement 174i an die Rückenlehne 14i angebunden. Das erste Befestigungselement 174i ist als ein Flausch- und Hakenelement ausgebildet. Alternativ wäre es denkbar, dass das erste Befestigungselement 174i als ein Druckknopf, als ein Haken oder als ein Clip ausgebildet ist. Der Flugzeugsitz 12i weist ein Befestigungsmittel 176i auf, welches die Kopfstütze 18i an der Rückenlehne 14i befestigt. Das Befestigungsmittel 176i ist als eine Führungsschiene für die Kopfstütze 18i ausgebildet. Das Befestigungsmittel 176i durchdringt das Bezugselement 164i der Rückenlehne 14i an zumindest einer Stelle 178i der Rückenlehne 14i. Das erste Befestigungselement 174i ist an einem Flausch- und Hakenband der Rückenlehne 14i befestigt, welches das Bezugselement 164i an der Stelle 178i mit der Rückenlehne 14i verbindet. Das erste Befestigungselement 174i ist unmittelbar neben dem Befestigungsmittel 176i an der Rückenlehne 14i angeordnet. Das Trennelement 36i ist teilweise zwischen dem Bezugselement 164i der Rückenlehne 14i und der Kopfstütze 18i angeordnet.

Die Infektionsschutztrenneinheit 32i weist ein mit der Rückenlehne 14i koppelbares weiteres erstes Befestigungselement auf, welches in den Figuren 13 und 14 nicht näher sichtbar ist. Das weitere erste Befestigungselement ist in einem mittigen Bereich der weiteren Rückenlehne 106i angeordnet. Das Trennelement 36i ist an einem oberen Ende 124i des Trennelements 36i über das weitere erste Befestigungselement an die weitere Rückenlehne 106i angebunden. Das weitere erste Befestigungselement ist zumindest im Wesentlichen identisch zu dem ersten Befestigungselement 174i ausgebildet und montiert. Der weitere Flugzeugsitz 46i weist ein nicht näher dargestelltes weiteres Befestigungsmittel auf, welches die weitere Kopfstütze 172i an der weiteren Rückenlehne 106i befestigt. Das weitere Befestigungsmittel ist zumindest im Wesentlichen identisch zu dem Befestigungsmittel 176i des Flugzeugsitzes 12i ausgebildet. Das weitere Befestigungsmittel durchdringt das weitere Bezugselement 166i der weiteren Rückenlehne 106i an zumindest einer Stelle der Rückenlehne 106i. Das weitere erste Befestigungselement ist unmittelbar neben dem weiteren Befestigungsmittel an der weiteren Rückenlehne 106i angeordnet. Das Trennelement 36i ist teilweise zwischen dem weiteren Bezugselement 166i der weiteren Rückenlehne 106i und der weiteren Kopfstütze 172i angeordnet.

Die Infektionsschutztrenneinheit 32i weist ein Verbindungselement 130i auf (Fig. 13). Das Verbindungselement 130i ist zumindest teilweise innerhalb des Trennelements 36i angeordnet. Das Verbindungselement 130i ist einstückig mit dem ersten Befestigungselement 174i ausgebildet. Das Verbindungselement 130i ist einstückig mit dem weiteren ersten Befestigungselement ausgebildet. Das Verbindungselement 130i verbindet das erste Befestigungselement 174i mit dem weiteren ersten Befestigungselement. Das Verbindungselement 130i ist im vorliegenden Fall als ein Expanderseil ausgebildet. Alternativ kann das Verbindungselement 130i auch als ein anderes, einem Fachmann für geeignet erscheinendes Seil, als eine Schnur, als ein Draht oder als eine Kette ausgebildet sein.

Der Sitzteiler 92i umfasst ein Achselement 180i. Das Achselement 180i ist im vorliegenden Fall als ein Bolzen ausgebildet, welcher quer zu der Sitzrichtung 26i aus dem Sitzteiler 92i in Richtung der Rückenlehne 14i herausragt. Das Achselement 180i bildet eine Schwenkachse der Rückenlehne 14i aus. Die Rückenlehne 14i ist über das Achselement 180i mit dem Sitzteiler 92i verbunden. Der Sitzteiler 92i umfasst ein weiteres Achselement 182i. Das weitere Achselement 182i ist im vorliegenden Fall als ein Bolzen ausgebildet, welcher quer zu der Sitzrichtung 26i aus dem Sitzteiler 92i in Richtung der weiteren Rückenlehne 106i herausragt. Das weitere Achselement 182i bildet eine Schwenkachse der weiteren Rückenlehne 106i aus. Die weitere Rückenlehne 106i ist über das weitere Achselement 182i mit dem Sitzteiler 92i verbunden. Das Trennelement 36i kontaktiert eine Rückseite des Sitzteilers 92i. Das Trennelement 36i umhüllt die Rückseite des Sitzteilers 92i.

Die Infektionsschutztrenneinheit 32i weist ein mit dem Sitzteiler 92i koppelbares zweites Befestigungselement 184i auf. Das zweite Befestigungselement 184i ist im vorliegenden Fall als ein Haken ausgebildet, welcher an dem Achselement 180i eingehängt ist. Alternativ wäre es denkbar, dass das Befestigungselement 184i als ein Karabinerhaken, als ein Flausch- und Hakenband, als ein Kabelbinder und/oder als eine Schlinge ausgebildet ist. Das Trennelement 36i ist an einem unteren Ende 142i des Trennelements 36i über das zweite Befestigungselement 184i an das Achselement 180i angebunden. Das untere Ende 142i des Trennelements 36i ist im vorliegenden Fall zwischen der Sitzbodeneinheit 16i und der Armlehne 50i angeordnet. Das zweite Befestigungselement 184i ist zwischen der Rückenlehne 14i und der weiteren Rückenlehne 106i angeordnet. Das zweite Befestigungselement 184i ist kraftschlüssig und/oder formschlüssig mit dem Achselement 180i verbunden. Das zweite Befestigungselement 184i ist einstückig mit dem Trennelement 36i ausgebildet. Grundsätzlich wäre es denkbar, dass die Infektionsschutztrenneinheit 32i ein weiteres Verbindungselement aufweist, das das zweite Befestigungselement 184i mit dem Trennelement 36i verbindet. Dabei wäre es denkbar, dass das weitere Verbindungselement als ein Expanderseil ausgebildet ist. Dadurch könnte das Trennelement 36i vorteilhaft in Richtung der Sitzbodeneinheit 16i gespannt werden. Grundsätzlich wäre es auch denkbar, dass das zweite Befestigungselement 184i an einer anderen Stelle des Sitzteilers 92i, an der Armlehne 50i, an der Aufständereinheit, an einem Querrohr der Aufständereinheit, an der Rückenlehne 14i oder an einer anderen, einem Fachmann für geeignet erscheinenden Stelle des Flugzeugsitzes 12i anbindbar ist.

Die Infektionsschutztrenneinheit 32i weist ein mit dem Sitzteiler 92i koppelbares weiteres zweites Befestigungselement 186i auf. Das weitere zweite Befestigungselement 186i ist im vorliegenden Fall als ein Haken ausgebildet, welcher an dem weiteren Achselement 182i eingehängt ist. Das Trennelement 36i ist an einem unteren Ende 142i des Trennelements 36i über das weitere zweite Befestigungselement 186i an das weitere Achselement 182i angebunden. Das weitere zweite Befestigungselement 186i ist zwischen der weiteren Rückenlehne 106i und der Rückenlehne 14i angeordnet. Das weitere zweite Befestigungselement 186i ist kraftschlüssig und/oder formschlüssig mit dem weiteren Achselement 182i verbunden. Das weitere zweite Befestigungselement 186i ist im vorliegenden Fall einstückig mit dem Trennelement 36i ausgebildet.

**Bezugszeichen**

| | | | |
|---|---|---|---|
| 10 | Flugzeugsitzvorrichtung | 68 | Oberkante |
| 12 | Flugzeugsitz | 70 | Versteifungselement |
| 14 | Rückenlehne | 72 | Kantenschutz |
| 16 | Sitzbodeneinheit | 74 | Literaturtasche |
| 18 | Kopfstütze | 76 | Tischeinheit |
| 20 | Richtung | 78 | Tisch |
| 22 | Bezugselement | 80 | Befestigungselement |
| 24 | Flugzeugsitzbereich | 82 | Trennelement |
| 26 | Sitzrichtung | 84 | Lagereinheit |
| 28 | Oberkante | 86 | Bezugselement |
| 30 | Kopfbereich | 88 | Aufständereinheit |
| 32 | Infektionsschutztrenneinheit | 90 | Flugzeugsitz |
| 34 | Umgebung | 92 | Sitzteiler |
| 36 | Trennelement | 94 | Flugzeugkabinengangbereich |
| 38 | Ende | 96 | Trennelement |
| 40 | Ende | 98 | Unterseite |
| 42 | Bezugselement | 100 | Armlehnenbefestigungsbereich |
| 44 | Trennelement | 102 | Verstaueinheit |
| 46 | Flugzeugsitz | 104 | Schwenkachse |
| 48 | Sitzbank | 106 | Rückenlehne |
| 50 | Armlehne | 108 | Befestigungselement |
| 52 | Flugzeugsitzbereich | 110 | Freiraum |
| 54 | Unterkante | 112 | Richtung |
| 56 | Oberkante | 114 | Nut |
| 58 | Befestigungselement | 116 | Nut |
| 60 | Ausnehmung | 118 | Infektionsschutztrenneinheit |
| 62 | Unterkante | 120 | Flugzeugsitzbereich |
| 64 | Schlitz | 122 | Befestigungselement |
| 66 | Halteelement | 124 | Ende |
| 126 | Fortsatz | 158 | Verstaueinheit |
| 128 | Befestigungselement | 160 | Tasche |
| 130 | Verbindungselement | 162 | Rückseite |
| 132 | Öse | 164 | Bezugselement |
| 134 | Falte | 166 | Bezugselement |
| 136 | Falte | 168 | Antimakassar |
| 138 | Falte | 170 | Befestigungselement |
| 140 | Befestigungselement | 172 | Kopfstütze |
| 142 | Ende | 174 | Befestigungselement |
| 144 | Grundrahmen | 176 | Befestigungsmittel |
| 146 | Kröpfung | 178 | Stelle |
| 148 | Fortsatz | 180 | Achselement |
| 150 | Befestigungselement | 182 | Achselement |
| 152 | Rückseite | 184 | Befestigungselement |
| 154 | Schwenkmechanik | 186 | Befestigungselement |
| 156 | Öse | | |

## Patentansprüche

1. Flugzeugsitzvorrichtung (10a; 10b; 10c; 10d; 10e; 10f; 10g; 10h; 10i) mit zumindest einem Flugzeugsitz (12a; 12b; 12c; 12d; 12e; 12f; 12g; 12h; 12i), welcher eine Rückenlehne (14a; 14b; 14c; 14d; 14e; 14f; 14g; 14h; 14i) aufweist und einen Flugzeugsitzbereich (24a; 24b; 24c; 24d; 24e; 24f; 24g; 24h; 24i) ausbildet, der von der Rückenlehne (14a; 14b; 14c; 14d; 14e; 14f; 14g; 14h; 14i) in zumindest einer Richtung begrenzt ist, mit zumindest einer Infektionsschutztrenneinheit (32a; 32b; 32c; 32d; 32e; 32f; 32g; 32h; 32i), die an der Rückenlehne (14a; 14b; 14c; 14d; 14e; 14f; 14g; 14h; 14i) des zumindest einen Flugzeugsitzes (12a; 12b; 12c; 12d; 12e; 12f; 12g; 12h; 12i) und/oder an einer Kopfstütze (18a; 18b; 18c; 18g; 18i) des zumindest einen Flugzeugsitzes (12a; 12b; 12c; 12d; 12e; 12f; 12g; 12h; 12i) angeordnet ist und die dazu vorgesehen ist, den Flugzeugsitzbereich (24a; 24b; 24c; 24d; 24e; 24f; 24g; 24h; 24i) zumindest in einem Kopfbereich (30a; 30b; 30c; 30d; 30e; 30f; 30g; 30h; 30i) von einer Umgebung (34a; 34b; 34c; 34d; 34e; 34f; 34g; 34h; 34i) des Flugzeugsitzbereichs (24a; 24b; 24c; 24d; 24e; 24f; 24g; 24h; 24i), insbesondere von einem weiteren Flugzeugsitzbereich (52b; 52e; 52f; 52g; 52h)und/oder einem Flugzeugkabinengangbereich (94d), abzutrennen, mit zumindest einem weiteren Flugzeugsitz (46e; 46f; 46g; 46h; 46i), welcher gemeinsam mit dem zumindest einen Flugzeugsitz (12e; 12f; 12g; 12h; 12i) in einer Sitzreihe angeordnet ist, wobei die zumindest eine Infektionsschutztrenneinheit (32e; 32f; 32g; 32h; 32i) mit der Rückenlehne (14e; 14f; 14g; 14h; 14i) des zumindest einen Flugzeugsitzes (12e; 12f; 12g; 12h; 12i) und mit einer weiteren Rückenlehne (106e; 106f; 106g; 106h; 106i) des zumindest einen weiteren Flugzeugsitzes (46e; 46f; 46g; 46h; 46i) gekoppelt ist, **dadurch gekennzeichnet, dass** die zumindest eine Infektionsschutztrenneinheit (32f; 32g; 32h; 32i) zumindest ein aus einem Textil und/oder aus einer Folie gebildetes Trennelement (36f; 36g; 36h; 36i) aufweist, das dazu vorgesehen ist, einen Freiraum (110f; 110g; 110h; 110i) zwischen der Rückenlehne (14f; 14g; 14h; 14i) des zumindest einen Flugzeugsitzes (12f; 12g; 12h; 12i) und der weiteren Rückenlehne (106f; 106g; 106h; 106i) des zumindest einen weiteren Flugzeugsitzes (46f; 46g; 46h; 46i) zumindest zu einem Großteil auszufüllen.

2. Flugzeugsitzvorrichtung (10a; 10b; 10c; 10d; 10e) nach Anspruch 1, **dadurch gekennzeichnet, dass** die zumindest eine Infektionsschutztrenneinheit (32a; 32b; 32c; 32d; 32e) zumindest ein Trennelement (36a; 36b; 36c; 36d; 36e) aufweist, welches plattenförmig ausgebildet ist und sich zumindest im Wesentlichen in einer Sitzrichtung (26a; 26b; 26c; 26d; 26e) des zumindest einen Flugzeugsitzes (12a; 12b; 12c; 12d; 12e) erstreckt.

3. Flugzeugsitzvorrichtung (10c) nach Anspruch 2, **dadurch gekennzeichnet, dass** die zumindest eine Infektionsschutztrenneinheit (32c) zumindest ein weiteres Trennelement (82c) aufweist, welches beweglich an dem zumindest einen Trennelement (36c) angeordnet ist.

4. Flugzeugsitzvorrichtung (10d) nach Anspruch 2, **dadurch gekennzeichnet, dass** die zumindest eine Infektionsschutztrenneinheit (32d) zumindest ein weiteres Trennelement (96d) aufweist, welches mit dem zumindest einen Trennelement (36d) verbunden und ausziehbar in Richtung einer Armlehne (50d) des zumindest einen Flugzeugsitzes (12d) ausgebildet ist.

5. Flugzeugsitzvorrichtung (10e) nach einem der vorhergehenden Ansprüche, **dadurch gekennzeichnet, dass** die zumindest eine Infektionsschutztrenneinheit (32e) zumindest ein Befestigungselement (108e) aufweist, das zur Befestigung der Infektionsschutztrenneinheit (32e) dazu vorgesehen ist, zwischen der Rückenlehne (14e) des zumindest einen Flugzeugsitzes (12e) und der weiteren Rückenlehne (106e) des zumindest einen weiteren Flugzeugsitzes (46e) angeordnet zu werden.

6. Flugzeugsitzvorrichtung (10e) nach Anspruch 5, **dadurch gekennzeichnet, dass** das zumindest eine Befestigungselement (108e) eine Nut (114e) und eine weitere Nut (116e) aufweist, wobei die Nut (114e) dazu vorgesehen ist, die Rückenlehne (14e) des zumindest einen Flugzeugsitzes (12e) teilweise aufzunehmen und die weitere Nut (116e) dazu vorgesehen ist, die weitere Rückenlehne (106e) des zumindest einen weiteren Flugzeugsitzes (46e) teilweise aufzunehmen.

7. Flugzeugsitzvorrichtung (10f; 10g; 10i) nach einem der vorhergehenden Ansprüche, **dadurch gekennzeichnet, dass** die zumindest eine Infektionsschutztrenneinheit (32f; 32g; 32i) zumindest ein mit der Rückenlehne (14f; 14g; 14i) koppelbares Befestigungselement (122f; 122g; 174i) aufweist, wobei das zumindest eine Trennelement (36f; 36g; 36i) an einem oberen Ende (124f; 124g; 124i) des zumindest einen Trennelements (36f; 36g; 36i) über das zumindest eine Befestigungselement (122f; 122g; 174i) an die Rückenlehne (14f; 14g; 14i) angebunden ist.

8. Flugzeugsitzvorrichtung (10g; 10i) nach Anspruch 7, **dadurch gekennzeichnet, dass** die zumindest eine Infektionsschutztrenneinheit (32g; 32i) zumindest ein weiteres Befestigungselement (150g; 184i, 186i) aufweist, welches das zumindest eine Trennelement (36g; 36i) fest mit einem Sitzteiler (92g; 92i) verbindet.

9. Flugzeugsitzvorrichtung (10h) nach einem der vorhergehenden Ansprüche, **dadurch gekennzeichnet, dass** das zumindest eine Trennelement (36h) einstückig mit zumindest einem Bezugselement (164h) der Rückenlehne (14h) und/oder mit zumindest einem weiteren Bezugselement (166h) der weiteren Rückenlehne (106h) ausgebildet ist.

## Claims

1. An aircraft seat device (10a; 10b; 10c; 10d; 10e; 10f; 10g; 10h; 10i) with at least one aircraft seat (12a; 12b; 12c; 12d; 12e; 12f; 12g; 12h; 12i), which has a backrest (14a; 14b; 14c; 14d; 14e; 14f; 14g; 14h; 14i) and forms an aircraft seat region (24a; 24b; 24c; 24d; 24e; 24f; 24g; 24h; 24i) that is delimited in at least one direction by the backrest (14a; 14b; 14c; 14d; 14e; 14f; 14g; 14h; 14i), with at least one infection-protection separation unit (32a; 32b; 32c; 32d; 32e; 32f; 32g; 32h; 32i), which is arranged at the backrest (14a; 14b; 14c; 14d; 14e; 14f; 14g; 14h; 14i) of the at least one aircraft seat (12a; 12b; 12c; 12d; 12e; 12f; 12g; 12h; 12i) and/or at a headrest (18a; 18b; 18c; 18g; 18i) of the at least one aircraft seat (12a; 12b; 12c; 12d; 12e; 12f; 12g; 12h; 12i) and which is configured to separate the aircraft seat region (24a; 24b; 24c; 24d; 24e; 24f; 24g; 24h; 24i) at least in a head region (30a; 30b; 30c; 30d; 30e; 30f; 30g; 30h; 30i) from an environment (34a; 34b; 34c; 34d; 34e; 34f; 34g; 34h; 34i) of the aircraft seat region (24a; 24b; 24c; 24d; 24e; 24f; 24g; 24h; 24i), in particular from a further aircraft seat region (52b; 52e; 52f; 52g; 52h) and/or from an aircraft cabin aisle region (94d), and with at least one further aircraft seat (46e; 46f; 46g; 46h; 46i) which is arranged in a seat row together with the at least one aircraft seat (12e; 12f; 12g; 12h; 12i), wherein the at least one infection-protection separation unit (32e; 32f; 32g; 32h; 32i) is coupled with the backrest (14e; 14f; 14g; 14h; 14i) of the at least one aircraft seat (12e; 12f; 12g; 12h; 12i) and with a further backrest (106e; 106f; 106g; 106h; 106i) of the at least one further aircraft seat (46e; 46f; 46g; 46h; 46i), **characterized in that** the at least one infection-protection separation unit (32f; 32g; 32h; 32i) comprises at least one separation element (36f; 36g; 36h; 36i) made of a textile and/or a film which is configured to at least largely fill a free space (110f; 110g; 110h; 110i) between the backrest (14f; 14g; 14h; 14i) of the at least one aircraft seat (12f; 12g; 12h; 12i) and the further backrest (106f; 106g; 106h; 106i) of the at least one further aircraft seat (46f; 46g; 46h; 46i).

2. The aircraft seat device (10a; 10b; 10c; 10d; 10e) according to claim 1, **characterized in that** the at least one infection-protection separation unit (32a; 32b; 32c; 32d; 32e) comprises at least one separation element (36a; 36b; 36c; 36d; 36e), which is formed in a plate shape and extends at least substantially in a sitting direction (26a; 26b; 26c; 26d; 26e) of the at least one aircraft seat (12a; 12b; 12c; 12d; 12e).

3. The aircraft seat device (10c) according to claim 2, **characterized in that** the at least one infection-protection separation unit (32c) comprises at least one further separation element (82c), which is arranged movably at the at least one separation element (36c).

4. The aircraft seat device (10d) according to claim 2, **characterized in that** the at least one infection-protection separation unit (32d) comprises at least one further separation element (96d), which is connected with the at least one separation element (36d) and is implemented so as to be extractable toward an armrest (50d) of the at least one aircraft seat (12d).

5. The aircraft seat device (10e; 10f; 10g; 10h; 10i) according to any one of the preceding claims, **characterized in that** the at least one infection-protection separation unit (32e) comprises at least one fastening element (108e) which, for a fastening of the infection-protection separation unit (32e), is configured to be arranged between the backrest (14e) of the at least one aircraft seat (12e) and the further backrest (106e) of the at least one further aircraft seat (46e).

6. The aircraft seat device (10e) according to claim 5, **characterized in that** the at least one fastening element (108e) comprises a groove (114e) and a further groove (116e), the groove (114e) being configured to partially accommodate the backrest (14e) of the at least one aircraft seat (12e) and the further groove (116e) being configured to partially accommodate the further backrest (106e) of the at least one further aircraft seat (46e).

7. The aircraft seat device (10f; 10g; 10i) according to any one of the preceding claims, **characterized in that** the at least one infection-protection separation unit (32f; 32g; 32i) comprises at least one fastening element (122f; 122g; 174i) which is couplable with the backrest (14f; 14g; 14i), with the at least one separation element (36f; 36g; 36i) being connected to the backrest (14f; 14g; 14i) at an upper end (124f; 124g; 124i) of the at least one separation element (36f; 36g; 36i) via the at least one fastening element (122f; 122g; 174i).

8. The aircraft seat device (10g; 10i) according to claim 7, **characterized in that** the at least one infection-protection separation unit (32g; 32i) comprises at least one further fastening element (150g; 184i, 186i), which connects the at least one separation element (36g; 36i) fixedly to a seat divider (92g; 92i).

9. The aircraft seat device (10h) according to any one of the preceding claims, **characterized in that** the at least one separation element (36h) is implemented integrally with at least one cover element (164h) of the backrest (14h) and/or with at least one further cover element (166h) of the further backrest (106h).

## Revendications

1. Dispositif de siège d'avion (10a; 10b; 10c; 10d; 10e; 10f; 10g; 10h; 10i) comprenant au moins un siège d'avion (12a; 12b; 12c; 12d; 12e; 12f; 12g; 12h; 12i) qui présente un dossier (14a; 14b; 14c; 14d; 14e; 14f; 14g; 14h; 14i) et qui forme une zone de siège d'avion (24a; 24b; 24c; 24d; 24e; 24f; 24g; 24h; 24i) qui est délimitée par le dossier (14a; 14b; 14c; 14d; 14e; 14f; 14g; 14h; 14i) dans au moins une direction, comprenant au moins une unité de séparation de protection contre les infections (32a; 32b; 32c; 32d; 32e; 32f; 32g; 32h; 32i) qui est disposée au niveau du dossier (14a; 14b; 14c; 14d; 14e; 14f; 14g; 14h; 14i) de l'au moins un siège d'avion (12a; 12b; 12c; 12d; 12e; 12f; 12g; 12h; 12i) et/ou au niveau d'un appui-tête (18a; 18b; 18c; 18g; 18i) de l'au moins un siège d'avion (12a; 12b; 12c; 12d; 12e; 12f; 12g; 12h; 12i) et qui est prévue pour séparer la zone de siège d'avion (24a; 24b; 24c; 24d; 24e; 24f; 24g; 24h; 24i) au moins dans une zone de tête (30a; 30b; 30c; 30d; 30e; 30f; 30g; 30h; 30i) d'un environnement (34a; 34b; 34c; 34d; 34e; 34f; 34g; 34h; 34i) de la zone de siège d'avion (24a; 24b; 24c; 24d; 24e; 24f; 24g; 24h; 24i), en particulier d'une autre zone de siège d'avion (52b; 52e; 52f; 52g; 52h) et/ou d'une zone de couloir de cabine d'avion (94d), comprenant au moins un autre siège d'avion (46e; 46f; 46g; 46h; 46i) qui est disposé conjointement avec l'au moins un siège d'avion (12e; 12f; 12g; 12h; 12i) dans une rangée de sièges, l'au moins une unité de séparation de protection contre les infections (32e; 32f; 32g; 32h; 32i) étant couplée au dossier (14e; 14f; 14g; 14h; 14i) de l'au moins un siège d'avion (12e; 12f; 12g; 12h; 12i) et à un autre dossier (106e; 106f; 106g; 106h; 106i) de l'au moins un autre siège d'avion (46e; 46f; 46g; 46h; 46i), **caractérisé en ce que** l'au moins une unité de séparation de protection contre les infections (32f; 32g; 32h; 32i) présente au moins un élément de séparation (36f; 36g; 36h; 36i) formé d'un textile et/ou d'un film qui est prévu pour remplir au moins en grande partie un espace libre (110f; 110g; 110h; 110i) entre le dossier (14f; 14g; 14h; 14i) de l'au moins un siège d'avion (12f; 12g; 12h; 12i) et l'autre dossier (106f; 106g; 106h; 106i) de l'au moins un autre siège d'avion (46f; 46g; 46h; 46i).

2. Dispositif de siège d'avion (10a; 10b; 10c; 10d; 10e) selon la revendication 1, **caractérisé en ce que** l'au moins une unité de séparation de protection contre les infections (32a; 32b; 32c; 32d; 32e) présente au moins un élément de séparation (36a; 36b; 36c; 36d; 36e) qui est réalisé en forme de plaque et qui s'étend au moins sensiblement dans une direction de siège (26a; 26b; 26c; 26d; 26e) de l'au moins un siège d'avion (12a; 12b; 12c; 12d; 12e).

3. Dispositif de siège d'avion (10c) selon la revendication 2, **caractérisé en ce que** l'au moins une unité de séparation de protection contre les infections (32c) présente au moins un autre élément de séparation (82c) qui est disposé de manière mobile sur l'au moins un élément de séparation (36c).

4. Dispositif de siège d'avion (10d) selon la revendication 2, **caractérisé en ce que** l'au moins une unité de séparation de protection contre les infections (32d) présente au moins un autre élément de séparation (96d) qui est connecté à l'au moins un élément de séparation (36d) et qui est réalisé de manière à pouvoir être extrait dans la direction d'un accoudoir (50d) de l'au moins un siège d'avion (12d).

5. Dispositif de siège d'avion (10e) selon l'une quelconque des revendications précédentes, **caractérisé en ce que** l'au moins une unité de séparation de protection contre les infections (32e) présente au moins un élément de fixation (108e) qui est prévu pour la fixation de l'unité de séparation de protection contre les infections (32e) de manière à être disposé entre le dossier (14e) de l'au moins un siège d'avion (12e) et l'autre dossier (106e) de l'au moins un autre siège d'avion (46e).

6. Dispositif de siège d'avion (10e) selon la revendication 5, **caractérisé en ce que** l'au moins un élément de fixation (108e) présente une rainure (114e) et une autre rainure (116e), la rainure (114e) étant prévue pour recevoir partiellement le dossier (14e) de l'au moins un siège d'avion (12e) et l'autre rainure (116e) étant prévue pour recevoir partiellement l'autre dossier (106e) de l'au moins un autre siège d'avion (46e).

7. Dispositif de siège d'avion (10f; 10g; 10i) selon l'une quelconque des revendications précédentes, **caractérisé en ce que** l'au moins une unité de séparation de protection contre les infections (32f; 32g; 32i) présente au moins un élément de fixation (122f; 122g; 174i) pouvant être couplé au dossier (14f; 14g; 14i), l'au moins un élément de séparation (36f; 36g; 36i) étant relié à une extrémité supérieure (124f; 124g; 124i) de l'au moins un élément de séparation (36f; 36g; 36i) par le biais de l'au moins un élément de fixation (122f; 122g; 174i) au dossier (14f; 14g; 14i).

8. Dispositif de siège d'avion (10g; 10i) selon la revendication 7, **caractérisé en ce que** l'au moins une unité de séparation de protection contre les infections (32g; 32i) présente au moins un autre élément de fixation (150g; 184i, 186i) qui connecte fixement l'au moins un élément de séparation (36g; 36i) à un diviseur de siège (92g; 92i).

9. Dispositif de siège d'avion (10h) selon l'une quelconque des revendications précédentes, **caractérisé en ce que** l'au moins un élément de séparation (36h) est réalisé d'une seule pièce avec au moins un élément de revêtement (164h) du dossier (14h) et/ou avec au moins un autre élément de revêtement (166h) de l'autre dossier (106h).
